Europäisches Patentamt

European Patent Office

Office européen des brevets

(19)

(11) **EP 1 155 509 B1**

(12) **EUROPEAN PATENT SPECIFICATION**

(45) Date of publication and mention
of the grant of the patent:
**16.07.2003 Bulletin 2003/29**

(21) Application number: **00905206.9**

(22) Date of filing: **23.02.2000**

(51) Int Cl.⁷: **H04B 1/707**, H04L 25/03

(86) International application number:
**PCT/GB00/00649**

(87) International publication number:
**WO 00/051260 (31.08.2000 Gazette 2000/35)**

(54) **ADAPTIVE FILTER FOR A DIRECT SEQUENCE SPREAD SPECTRUM RECEIVER**

ANPASSBARES FILTER FÜR EINEN DIREKTSEQUENZ SPREIZSPEKTRUMEMPFÄNGER

FILTRE ADAPTATIF POUR RECEPTEUR A ETALEMENT DU SPECTRE EN SEQUENCE DIRECTE

(84) Designated Contracting States:
**AT BE CH CY DE DK ES FI FR GB GR IE IT LI LU
MC NL PT SE**

(30) Priority: **25.02.1999 GB 9904421**

(43) Date of publication of application:
**21.11.2001 Bulletin 2001/47**

(73) Proprietor: **THE UNIVERSITY COURT OF
THE UNIVERSITY OF EDINBURGH
Edinburgh EH8 9YL (GB)**

(72) Inventors:
• **SPANGENBERG, Sascha, Marcus
Edinburgh EH7 4EB (GB)**

• **CRUICKSHANK, David, George, Melville
Edinburgh EH9 1HL (GB)**
• **MCLAUGHLIN, Stephen
Edinburgh EH15 2QS (GB)**
• **GRANT, Peter, M.
Edinburgh EH9 1QU (GB)**

(74) Representative: **Hanson, William Bennett
J.Y. & G.W. Johnson,
Kingsbourne House,
229-231 High Holborn
London WC1V 7DP (GB)**

(56) References cited:
**WO-A-94/29985          US-A- 5 692 006**

EP 1 155 509 B1

**Description**

**Background to the Invention**

The present invention relates to a telecommunications receiver employing a new direct sequence code division multiple access (DS-CDMA) architecture which allows the use of fast adaptive algorithms.

Two adaptive algorithms are commonly in use, the LMS and RLS Algorithms[1,2,3] and these are described in Appendix I.

The least mean square (LMS) algorithm (and the closely related normalised least mean squares (NLMS) algorithm) is a stochastic gradient algorithm which has only one parameter, the step size $\mu$. The LMS algorithm is computationally simple but its convergence rate is slow and highly dependent on the properties of the input signal, more specifically on the eigenvalue ratio of the autocorrelation matrix. When many elements of the input signal are unknown, for example the channel in a mobile communications system, it is difficult to choose $\mu$. The algorithm is numerically stable, but an inappropriate choice of $\mu$ can cause instability. In high noise conditions, the eigenvalue ratio of the autocorrelation matrix is low and this can help with convergence.

The recursive least squares (RLS) algorithm is computationally much more complex, but has much faster convergence than the LMS algorithm. It has two parameters, the forgetting factor $\lambda$ and the initial diagonal matrix term $\delta$. The forgetting factor is set appropriate to the rate of change of the autocorrelation of the input signal. The diagonal term has little effect on the algorithm once converged, but does affect the size of internal variables within the algorithm during initial convergence. The RLS algorithm is usually considered converged within a number of iterations equal to twice the filter length, which is generally much faster than the LMS algorithm. The RLS algorithm can become numerically unstable when the autocorrelation matrix of the input signal is close to being a singular matrix.

There are a few much less common adaptive filter algorithms and the use of these algorithms has been found desirable. The fast a-posteriori error sequential technique (FAEST)[5,6] algorithm and its stabilised.version the SFAEST[7], which are also described in Appendix I, have a convergence rate close to the RLS algorithm but complexity close to the LMS algorithm. They do however impose an additional constraint: the input signal must have a shift invariant property. The shift invariant property simply means that the input signal must be the same as the input signal on the previous iteration shifted on by one sample, with only one new sample. This property is not satisfied by the conventional architecture for a minimum mean square error (MMSE) receiver for a DS-CDMA system[8]. The numerical stability of the FAEST algorithms is not as well understood as for LMS and RLS, but in practice the SFAEST algorithm seems to remain stable for a sufficiently long period of time for the purpose proposed here. The Fast Newton algorithm (see Appendix I) is an algorithm which can simplify the calculation of any of the above adaptive filter algorithms if the input signal can be modelled as an autoregressive filter with order less than is assumed by the above filters.

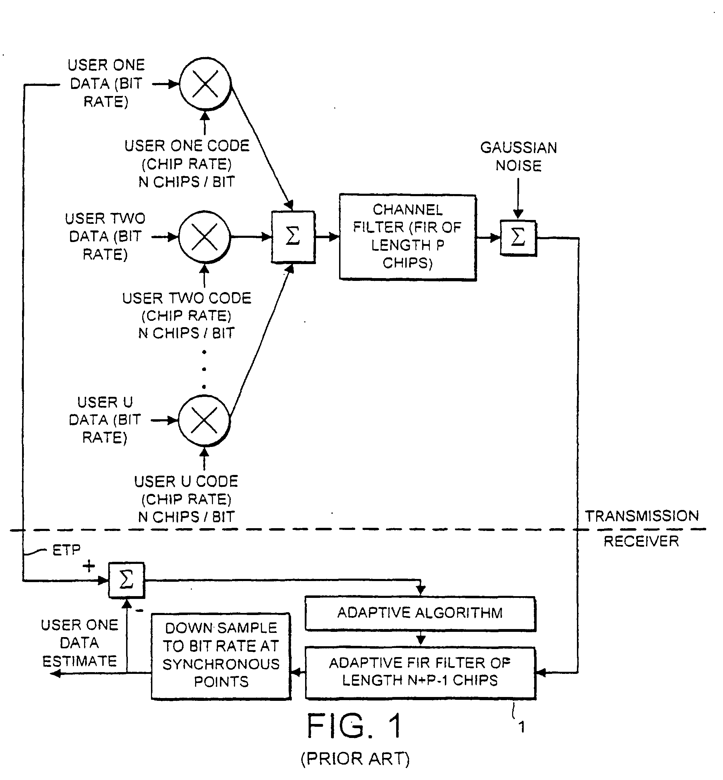

The conventional architecture for the uplink and downlink of a DS-CDMA system with an adaptive filter receiver is shown in Figure 1. In this architecture, the training of an adaptive FIR filter 1 of length N+P-1 chips (N being the number of chips per data bit and P the total number of chips in the code) is done at the bit rate, using an adaption error found by the algorithm to be the difference between data from a particular user and a sampled estimate of the data from the output of the filter 1, i.e. the filter has an effective training path ETP. The contents of the filter 1 change completely from one iteration thereof to the next. This means that convergence is slow and it is not possible to use the FAEST or SFAEST algorithm because the shift invariance property is not satisfied. With the LMS algorithm, convergence is too slow and the time taken to reconverge when a user switches on or off is far too slow. This architecture does work reasonably well with the RLS algorithm, although convergence is still not very rapid and the computational complexity is very high.

**Summary of the Invention**

It is one aim of the present invention to provide a DS-CDMA receiver using an adaptive filter in which the convergence is rapid. It is another aim of the invention to allow the use of the less common adaptive algorithms which has not hitherto been possible.

The present invention provides a direct sequence code division multiple access (DS-CDMA) receiver comprising an adaptive filter controlled by an adaptive algorithm for filtering data which has been multiplied by a spreading code and filtered by a channel filter, the adaptive filter having a length appropriate to model the inverse of the channel filter, and a precalculated multiuser detector operating on the output of the adaptive filter.

The algorithm is preferably either trained using the spread-multiplied signal of a desired user only, or from a composite signal which is the sum of the spread-multiplied signals of more than one, for example all, transmitting users. This means that the adaptive filter will be trained by new information at the chip rate of the code.

In a particular embodiment of the invention the fixed multiuser detector is of the minimum mean squared error (MMSE) type, but it may alternatively be of the zero forcing (decorrelating), Volterra, Radial Basis function, cancellation, near optimum or other decoding types.

The algorithm can for example comprise the least mean squares (LMS) or recursive least squares (RLS) algorithm. However, because the adaptive filter of the invention satisfies the shift invariance property, the algorithm may alternatively comprise the fast a-posteriori error sequential technique (FAEST) algorithm, the stabilised FAEST (SFAEST) algorithm, and the above algorithms or others may be used in combination with the Fast Newton algorithm.

## Brief Description of the Drawings

In order that the present invention may be more readily understood, reference will now be made, by way of example only, to the accompanying drawings, in which:-

Figure 1 shows the conventional DS-CDMA architecture already discussed;

Figure 2 shows DS-CDMA architecture according to an embodiment of the invention;

Figures 3, 4 and 5 are graphs of simulation results, showing respectively the comparative convergence of the architectures of Figures 1 and 2, the relative convergence rates of different algorithms using the architecture of Figure 2, and the bit error ratio (BER) results for the architecture of Figure 2;

Figure 6 schematically shows a DS-CDMA system with no channel model;

Figures 7 and 8 are graphs showing signal to noise performance of a Wiener filter calculated for 7 chip and 31 chip Gold codes respectively;

Figures 9 and 10 are graphs showing bit error rate (BER) perfomance of the Wiener filter calculated for 7 chip and 31 chip Gold codes respectively;

Figure 11 is a graph showing convergence properties of the LMS and RLS adaptive filters;

Figure 12 is a graph showing BER performance of the LMS and RMS algoritms after 1000 iterations allowed for convergence, compared with the Wiener optimal and a matched filter with no MAI;

Figures 13 and 14 are graphs plotting BER against number of active users in an AWGN channel and a stationary multipath channel respectively, all users being equal power and the spreading code length being 7;

Figure 15 schematically shows the construction of a received signal $Y(n)$ ;

Figures 16 a) to d) schematically show the structures of a matched filter, a parallel canceller using matched filters, a Wiener filter and a parallel canceller using Wiener filters respectively;

Figure 17 is a graph showing the BER performance of the filters shown in Figures 16 a) to d); and

Figures 18 a) to d) are graphs plotting simulated BER averaged over all users against number of users for four differnt signal to additive Gaussian noise ratios, with 60,000 data bits per user and a sequence length of 64.

## Deatiled Description of the Preferred Embodiments

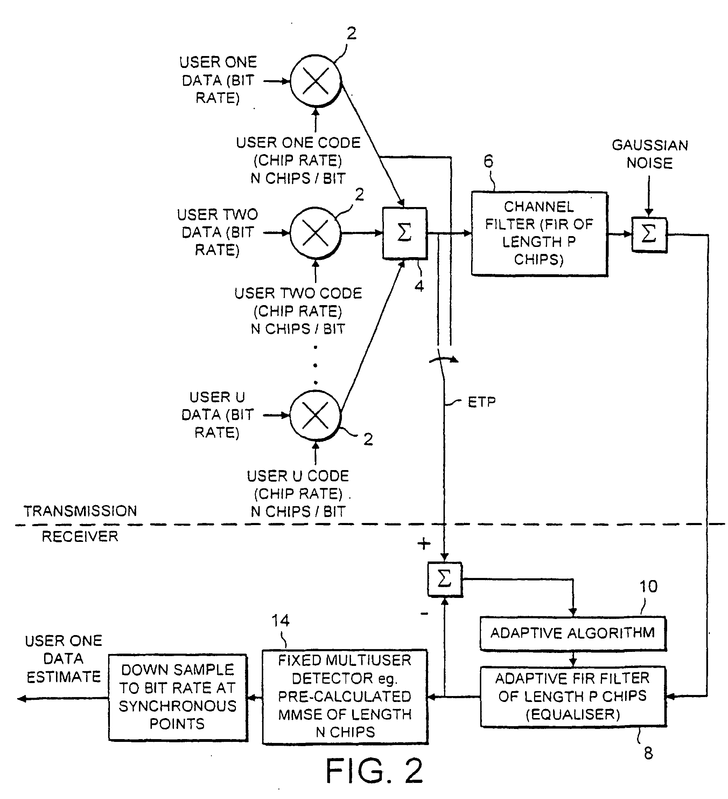

Figure 2 shows DS-CDMA transmitter and receiver architecture comprising spreading means 2 respectively operated by each user in which a data signal from the user is multiplied by one of a set of spreading codes uniquely allocated to the respective user. The data is supplied to the spreading means at its bit rate and the code is input at its chip rate, there being N code chips for each data bit.

The spread-multiplied data is summed at 4 and filtered in a finite impulse response (FIR) channel filter 6 of length P chips, the output of which is transmitted, with incidental Gaussian noise, to a receiver comprising an adaptive FIR filter 8, also of length P chips.

An adaptive algorithm 10 controls and trains the adaptive filter 8. The algorithm 10 basically finds an error signal which is the difference between (a) either the spread-multiplied data from the desired user only or the composite spread-multiplied signal, and (b) the output of the adaptive filter 8. The choice of training data in (a) can either be preset or switchable. The effective training paths ETP for the adaptive filter, representing this operation of the algorithm are shown in Figure 2.

The adaptive filter 8 acts similarly to (but not exactly the same as) a conventional equaliser. As previously stated, training can be on the desired user's signal only, or on the composite chip rate signal. The filter 8 has less taps than the adaptive filter 1 in the conventional architecture and is trained at the chip rate, which means much faster convergence. The adaptive filter 8 also satisfies the shift invariance property required for the FAEST and SFAEST algorithm and this allows LMS complexity levels with RLS convergence rates. A fixed multiuser detector 14 is precalculated and stored at the receiver and is based on knowledge obtained about the number of users in the system and their spreading codes. This detector 14 can be of the MMSE type[9] (used in the comparisons here) or it can be of a different type, for example zero forcing or decorrelating[10,] Voterra[11,] Radial Basis function[11]. cancellation based[13, 14] or near optimum decoding based on Viterbi decoding[15].

## Summary of Multiuser Detection Techniques

The conventional single user detector or spreading code matched filter calculates the correlation between the received signal and the spreading code (or the spreading code convolved with the channel impulse response in a multipath channel) over the data bit period. The multiple access interference (MAI) impacts the ability to recover the desired transmissions with this receiver and is more pronounced for high power interfering users.

The matched filter is the optimum detector in AWGN but the MAI cross-correlation terms are not Gaussian unless there are many active users. In this situation the optimal detector is not the conventional matched filter but rather a form of multi-user detector.

The detector that yields the most likely transmitted sequence maximizes the probability that it was transmitted. When all possible transmitted sequences are equally probable, this is the maximum likelihood sequence estimator (MLSE). When implemented with a Viterbi algorithm the complexity is exponential in the number of users. The MLSE must also estimate the received amplitudes and phases but it lowers the mobile user transmitter power control accuracy requirement. Despite the performance and capacity gains over conventional detection, the MLSE is not a practical solution.

Here the zero forcing or decorrelating detector implements an inverse of the received signal autocorrelation matrix (neglecting the noise) such that the output is completely free of multiple access interference. The decorrelating detector was initially proposed in the late 1970s and it provides substantial performance/capacity gains over the conventional detector and does not need to know in advance the received signal amplitudes, avoiding sensitivity to estimation error. It has computational complexity significantly lower than MLSE. Another desirable feature is that it corresponds to the MLSE when the user energies are unknown. A disadvantage of this detector is that it causes noise enhancement i.e. the power associated with the noise term at the output of the decorrelating detector is always greater or equal to the noise term at the output of the conventional detector. A more significant disadvantage of the decorrelating detector is that the computations needed to invert the matrix are considerable.

A possibly superior linear receiver structure is to build an adaptive filter that minimises (at its output) the error power. This implements a partial or modified inverse of the autocorrelation matrix, dependent on the level of background noise, to balance the desire to decouple the users for MAI reduction while not enhancing the background noise. Again this receiver structure implements a matrix inversion operation and here we can apply the recursive adaptive filter techniques. This detector differs from the decorrelating detector in that it takes the noise terms into account to minimise the noise enhancement. Thus if noise is low the minimum mean squared error (MMSE) receiver approaches the decorrelating detector and achieves close to optimum performance. On the other hand, if the multiple access interference is small compared to the noise, then the matched filter detector solution is approached. This is exactly analogous to the MMSE linear equalizer used to combat inter-symbol interference. Unlike the decorrelating detector, it requires estimation of the received amplitudes but its complexity is independent of number of active users and explicit knowledge of the CDMA spreading sequences is not required for an adaptive implementation.

Other researchers have investigated radial basis function (which in its complete implementation is similar to MLSE, various simplifications have been suggested) and Volterra nonlinear approaches (where the received signal is passed through a power series nonlinear expansion before applying a linear filter eg. decorrelating or MMSE). Note that if a MMSE error type fixed multiuser detector is used, the overall impulse response of the adaptive filter followed by the fixed detector is not exactly the same as for the conventional architecture even when both systems are fully converged. This will give different bit error ratio (BER) results even when both the adaptive filters in the two receivers are fully converged. Note also that the adaptive filter 8 has an extremely low signal to noise ratio at its output as the processing gain has not been applied at this stage. This leads to a low eigenvalue spread which can help the convergence and stability of some adaptive algorithms but others exhibit instability in the extremely high noise conditions

Possible multiuser detectors are discussed in more detail in Appendix II.

The output from the detector 14 is down-sampled to the bit rate at the synchronous points to give the required estimate of the user's data signal.

**Simulation Results**

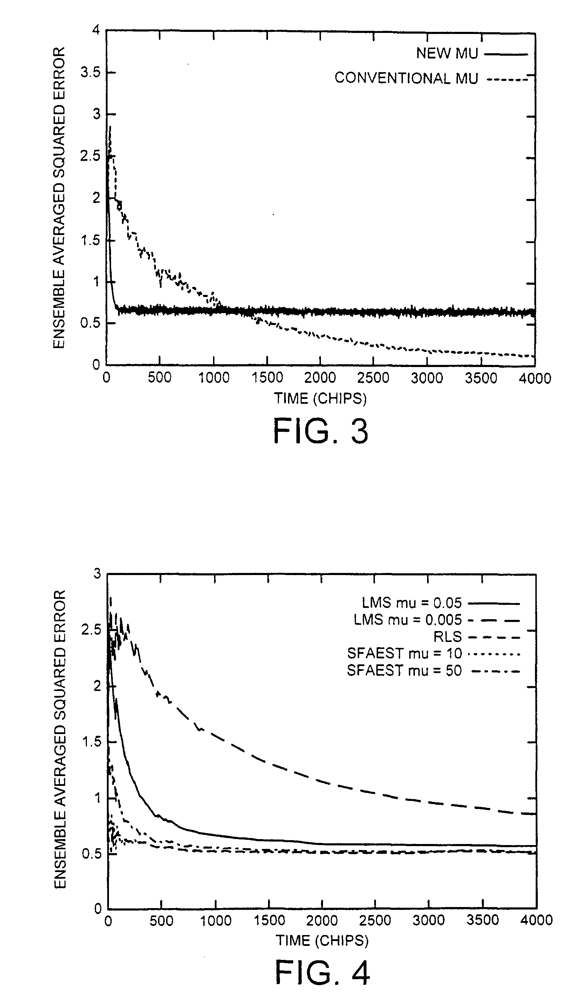

All simulation results presented below are for 16 chip spreading codes (i.e. P=16) and a six tap stationary channel. Firstly we show that the new architecture has far faster or convergence than the conventional one. Figure 3 shows convergence curves for the conventional architecture of Figure 1 and the new architecture of Figure 2. The new architecture is much faster than the conventional one, mostly because it is trained at the chip rate instead of the bit rate but also because the eigenvalue ratio of the autocorrelation is reduced in high noise.

The graph of Figure 3 shows ensemble averaged squared error at the output of the adaptive filter in both architectures plotted against time measured in chips, for the single user case. Both curves use the LMS algorithm with the value of $\mu$ individually optimised for each. The use of chip rate training instead of bit rate training, increases the convergence by a factor of 16, but in fact the convergence is more than 16 times faster because high noise reduces the eigenvalue ratio in the autocorrelation. The new algorithm converges to a MMSE 16 times higher than the conventional architecture, but this loss will be largely regained through the fixed multiuser detector.

Figure 4 shows the relative convergence rates of some different adaptive filter algorithms using the architecture of Figure 2. The use of the SFAEST algorithm is only possible in the new architecture, as the conventional one does not satisfy the shift invariance property.

Relatively speaking, the LMS algorithm is very slow. It can be made faster by increasing the value of $\mu$ but when this value is increased too far, the LMS algorithm does not converge to the MMSE error floor (misadjustment error) . The RLS is fast, but at the price of high computational complexity. The SFAEST algorithm is as quick as the RLS algorithm if it is initialised appropriately.

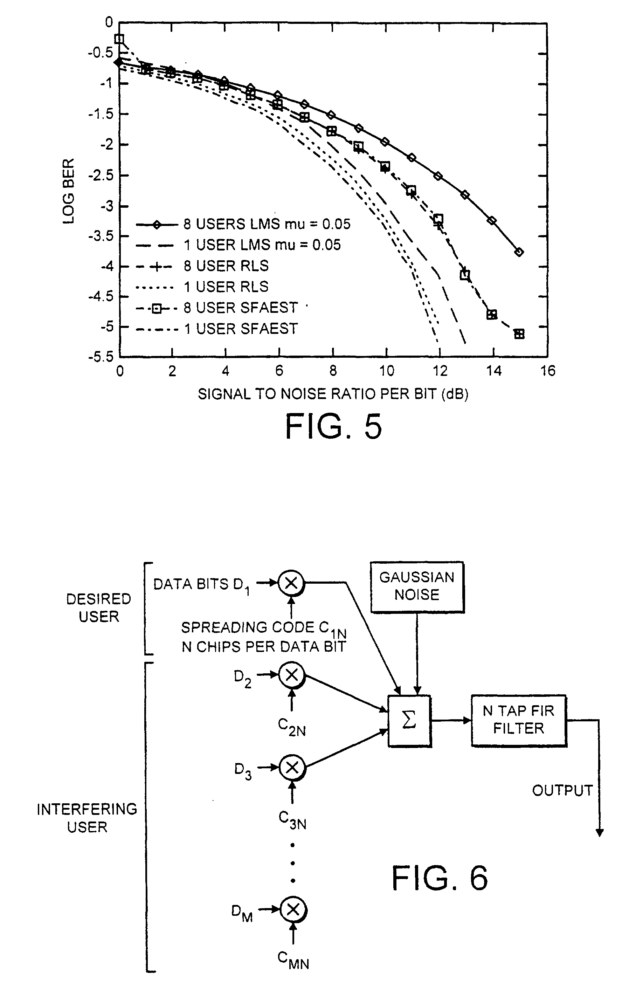

Figure 5 shows BER results for the new architecture after allowing 160 chips (only 10 databits) for convergence of the adaptive filter.

With only 160 databits for convergence, the LMS algorithm is not fully converged when the training period ends and this results in a slightly poorer performance than is obtainable with the conventional architecture. The RLS and SFAEST give similar results.

The architecture of the receiver of the invention is much faster converging and tracking than the conventional architecture with only a small loss in BER performance for a stationary channel. In a time varying channel, average BER will be better for the new architecture because of reduced tracking errors. The fast adaptive algorithms (FAEST, SFAEST, preferably in combination with Fast Newton) allow the new architecture to achieve good convergence without the computational complexity of the RLS algorithm.

The receiver of the invention could be integrated in a "hard-wired" form or could be made capable of being updated by using reconfigurable or replaceable firmware.

**APPENDIX I**

**Summaries of Adaptive Algorithms**

**Least mean square algorithm**

From the stochastic gradient approach [1] one obtains the well known least mean squares (LMS) algorithm which was first introduced in 1960 by Widrow and Hoff [2]. This algorithm is uncomplicated and yields acceptable performance in most cases. The LMS technique is probably the most frequently used adaptive algorithm in current communication system. It is derived by applying the method of steepest descent minimisation to the Wiener-Hopf equations which define the optimum Wiener filter and one obtains a simple recursive scheme of the form [3]

$$\left\{ \begin{array}{c} \text{new} \\ \text{tap weights} \end{array} \right\} = \left\{ \begin{array}{c} \text{old} \\ \text{tap weights} \end{array} \right\} + \left\{ \begin{array}{c} \text{learning} \\ \text{rate} \end{array} \right\} \left\{ \begin{array}{c} \text{new} \\ \text{information} \end{array} \right\} \qquad (1)$$

where the new information consists of the product of the filter input vector and the error signal, i.e. the difference between the desired filter output and the actual output of the filter. Essentially one can express the LMS algorithm (and many other adaptive algorithms) by means of three expressions [1] :

$$\text{Filter output: } y(t) = w(t)^T x(t) \qquad (2)$$

$$\text{Adaption error: } e(t) = d(t) - y(t) \tag{3}$$

$$\text{Tap weight update: } w(t \div 1) = w(t) \div \mu x(t)e(t) \tag{4}$$

where $\mathbf{x}$ is the filter input vector, $\mathbf{w}^T$ the transposed tap weight vector, d represents the desired filter output and $\mu$ is the learning rate (step size parameter).

Several modifications have been made to improve the LMS algorithm, the most important one resulted in the normalised LMS (NLMS [4]) which normalises the adaption error e using instantaneous estimates of the input vector power $\|\mathbf{x}\|^2$. Doing so largely improves the algorithm's stability characteristics and allows faster convergence. The LMS algorithm is computationally simple but its convergence rate is slow and highly dependent on the properties of the input signal, more specifically on the eigenvalue ratio of the autocorrelation matrix. When many elements of the input signal are unknown, for example the channel in a mobile communications system, it is difficult to choose $\mu$. The algorithm is numerically stable, but an inappropriate choice of $\mu$ can cause instability. In high noise conditions, the eigenvalue ratio of the autocorrelation matrix is low and this can help with convergence. Other versions of the LMS such as leaky, signed and quantised LMS [3] were developed but only the NLMS achieved sufficient stability at acceptable performance and is therefore considered as a candidate for application in advanced multiuser detection.

To illustrate the improved performance of the normalised LMS as compared to the standard LMS we will present the performance of both the LMS and NLMS later in this document report.

**Recursive least square algorithm**

The most popular least-square (LS) technique is is probably the recursive least squares (RLS) algorithm. The RLS algorithm is computationally much more complex, but has much faster convergence than the LMS algorithm. It has two parameters, the forgetting factor $\lambda$ and the initialisation factor $\delta$ for the diagonal matrix $\mathbf{P}(0)$, see Equations below. The forgetting factor is set appropriate to the rate of change of the autocorrelation of the input signal. The diagonal term has little effect on the algorithm once converged, but does effect the size of internal variables within the algorithm during initial convergence. The RLS algorithm is usually considered converged within a number of iterations equal to twice the filter length, which is generally much faster than the LMS algorithm. The RLS algorithm can become numerically unstable when the autocorrelation matrix of the input signal is close to being a singular matrix.

We can summarise the standard RLS algorithm as follows [1] :

INITIALISATION

$$P(0) = \delta^{-1}I$$

$$w(0) = 0$$

SUBSEQUENT ITERATIONS

$$g(t) = \frac{P(t-1)x(t)}{\lambda \div x^T(t)P(t-1)x(t)} \tag{5}$$

$$e(t) = d(t) - w_N^T(t-1)x_N(t) \tag{6}$$

$$w(t) = w(t-1) + g(t)e(t) \tag{7}$$

$$P(t) = \frac{1}{\lambda}(P(t-1) - g(t)x^T(t)P(t-1))\tag{8}$$

The vector $\mathbf{g}(t)$ is known as the gain vector of the algorithm, $\mathbf{P}(t)$ represents the inverse of the correlation matrix

$$\Phi(t) = \sum_{i=1}^{t} \lambda^{t-i} \mathbf{x}(t)\,\mathbf{x}(t)^T$$

which can be computed in a recursive manner by means of the matrix inversion lemma. The variable e denotes the a-priori error of the filter estimation and the filter weights are again represented by the vector $\mathbf{w}$.

**Fast a-posteriori error sequential technique (FAEST)**

The fast a-posteriori error sequential technique (FAEST) has first been reported by Carayannis et. al [5] in the context of least-square (LS) filtering. Compared to standard LS algorithms the FAEST uses a different approach for calculating the Kalman gain vector based on the a-posteriori error formulation rather than the a-priori error formulation as used in fast Kalman algorithms [6]. Assuming the shift invariance property of the input signal and introducing a slightly modified version of the Kalman gain, the FAEST algorithm manages to perform a direct updating of the Kalman gain without invoking matrix-vector multiplications.

The Kalman gain update according to the FAEST algorithm is summarised in the Table 1.

## Table 1: The FAEST algorithm.

| Time update of gain vector | Multiplications | Divisions |
|---|---|---|
| $e_N^f(t) = z(t) - \mathbf{a}_N^i(t-1)\,\mathbf{x}_N(t-1)$ | $N$ | – |
| $\varepsilon_N^f(t) = \frac{e_N^f(t)}{\gamma_N(t)}$ | – | 1 |
| $\alpha_N^f(t) = \lambda\alpha_N^f(t-1) + e_N^f(t)\,\varepsilon_N^f(t)$ | 2 | – |
| $\gamma_{N+1}(t) = \gamma_N(t)\frac{\alpha_N^f(t)}{\lambda\alpha_N^f(t-1)}$ | 2 | 1 |
| $\mathbf{w}_{N+1}(t) = \begin{bmatrix} 0 \\ \mathbf{w}_N(t-1) \end{bmatrix} - \frac{e_N^f(t)}{\gamma\alpha_N(t-1)}\begin{bmatrix} 1 \\ -\mathbf{a}_N(t-1) \end{bmatrix}$ | $N+1$ | 1 |
| $\mathbf{a}_N(t) = \mathbf{a}_N(t-1) - \varepsilon_N^f(t)\,\mathbf{w}_N(t-1)$ | $N$ | – |
| $e_N^b(t) = -\lambda\alpha_N^b(t-1)\,\mathbf{w}_{N+1}^{N+1}(t)$ | 2 | – |
| $\theta(t) = 1 + e_N^b(t)\frac{\mathbf{w}_{N+1}^{N+1}(t)}{\gamma_{N+1}(t)}$ | 1 | 1 |
| $\gamma_N(t) = \theta(t)\,\gamma_{N+1}(t)$ | 1 | – |
| $\varepsilon_N^b(t) = \frac{e_N^b(t)}{\gamma_N(t)}$ | – | 1 |
| $\alpha_N^b(t) = \lambda\alpha_N^b(t-1) + e_N^b(t)\,\varepsilon_N^b(t)$ | 2 | – |
| $\begin{bmatrix} \mathbf{w}_N(t) \\ 0 \end{bmatrix} = \mathbf{w}_{N+1}(t) - \mathbf{w}_{N+1}^{N+1}\begin{bmatrix} -\mathbf{b}_N(t-1) \\ 1 \end{bmatrix}$ | $N$ | – |
| $\mathbf{b}_N(t) = \mathbf{b}_N(t-1) - \varepsilon_M^b(t)\,\mathbf{w}_N(t)$ | $N$ | – |
| Total number of multiplications and divisions | $5N + 11$ | 5 |

It is well known that the FAEST algorithm suffers from sever stability problems and we will therefore not describe this algorithm in more detail but focus on its stabilised version, the SFAEST. For more information about FAEST please refer to [5].

**Stabilised FAEST**

The stabilised version of the FAEST algorithm has been derived by [7] and is presented in Table 3. For easier reading of the equations building the stabilised FAEST (SFAEST) algorithm, we will first list all variables occurring and explain their meaning with a few words, see Table 2.

Table 2:

| Variable definitions of the SFAEST algorithm. | |
|---|---|
| Variable Name | Definition |
| $x(t)$ | Filter input at time $t$ |
| $y(t)$ | Filter output, $y(t) = 0 \ \forall \ t < 0$ |
| $x_N(t)$ | Input vector $[x(t),..., x(t - N + 1)]$ |
| $g_N(t)$ | Dual Kalman gain vector |
| $a_N(t)$ | Forward predictor coefficients |
| $b_N(t)$ | Backward predictor coefficients |
| $h_N(t)$ | Filter coefficients |
| $e_N(t)$ | A-priori filter error |
| $\varepsilon_N(t)$ | A-posteriori filter error |
| $e^f_N(t), \bar{e}^f_N(t)$ | Forward predictor error and its corrected version |
| $e^b_N(t), \bar{e}^b_N(t)$ | Backward predictor error and its corrected version |
| $\alpha^f_N(t)$ | Forward prediction error power |
| $\alpha^b_N(t)$ | Backward prediction error power |
| $\gamma_N(t), \gamma_{N+1}(t)$ | $0 \leq \gamma_N(t) \leq 1$ |
| $\theta_N(t)$ | |
| $\xi_N(t), \xi_N(t)$ | Difference of errors and the corrected error difference |
| $\lambda$ | exp. forgetting factor $0 < \lambda \leq 1$ |

Table 3 shows the successive steps of the SFAEST algorithm and also evaluates the complexity in terms of multiplications and divisions required.

## Table 3: Tasks of SFAEST in order of computations and number of required MUL/DIV operations

| Tasks of SFAEST | MUL | DIV |
|---|---|---|
| Available at time $t$:<br>$g_N(t-1)$, $a_N(t-1)$, $b_N(t-1)$, $h_N(t-1)$, $x_N(t-1)$<br>$\gamma_N(t-1)$, $\alpha_N^f(t-1)$, $\alpha_N^b(t-1)$ | | |
| New Information:<br>$x(t)$, $y(t)$ | | |
| Computation of the residuals and corrections:<br>A-priori forward/backward errors (residuals): | | |
| 1) $e_N^f(t) = x(t) - a_N(t-1)^T x_N(t-1)$ | $N$ | – |
| 2) $e_N^b(t) = x(t-N) - b_N(t-1)^T x_N(t)$ | $N$ | – |
| Normalisation parameters: | | |
| 3) $\gamma_{N+1}(t) = \dfrac{\lambda \alpha_N^f(t-1)}{\lambda \alpha_N^f(t-1) + \gamma_N(t-1)(e_N^f(t))^2} \gamma_N(t-1)$ | 4 | 1 |
| 4) $\theta_N(t) = 1 + \gamma_{N+1}(t) e_N^b(t)(g_N^N(t-1) + \dfrac{e_N^f(t)}{\lambda \alpha_N^f(t-1)} a_N(t-1)^N)$ | 3 | 1 |
| 5) $\gamma_N(t) = \dfrac{\gamma_{N+1}(t)}{\theta_N(t)}$ and $\gamma_N(t) = \dfrac{1}{1 - g_N^T(t)x_N(t)}$ | – | 1 |
| 6) $k_N(t-1) = \lambda^{-N} \gamma_N(t-1) a_N^N(t-1)$ | 2 | – |
| Difference of errors: | | |
| 7) $\xi_N(t) = e_N^b(t) + k_N(t-1)e_N^f(t) + \lambda \alpha_N^b(t-1)g_N^N(t-1)$ | 3 | – |
| Difference of errors of *corrected* filters | | |
| 8) $\bar{\xi}_N(t) = \dfrac{\xi_N(t)}{1 + \rho(1-\gamma_N(t)) + \rho k_N^2(t-1)(1-\gamma_N(t-1))}$ | 4 | 1 |
| Corrected a-priori forward/backward errors: | | |
| 9) $\bar{e}_N^f(t) = e_N^f(t) - (1 - \gamma_N(t-1))k_N(t-1)\rho\bar{\xi}_N(t)$ | 3 | – |
| 10) $\alpha_N^f(t) = \lambda \alpha_N^f(t-1) + \gamma_N(t-1)(\bar{e}_N^f(t))^2$ | 3 | – |
| 11) $\bar{e}_N^b(t) = e_N^b(t) - (1 - \gamma_N(t))\rho\bar{\xi}_N(t)$ | 2 | – |
| 12) $\alpha_N^b(t) = \lambda \alpha_N^b(t-1) + \gamma_N(t)(\bar{e}_N^b(t))^2$ | 3 | – |
| Time update of the *dual* Kalman gain $g_N(t)$:<br>Extended Kalman gain vector: | | |
| 13) $g_{N-1}(t) = \begin{bmatrix} 0 \\ g_N(t-1) \end{bmatrix} - \dfrac{\bar{e}_N^f(t)}{\lambda \alpha_N^f(t-1)} \begin{bmatrix} 1 \\ -a_N(t-1) \end{bmatrix}$ | $N+1$ | 1 |
| Forward filter: | | |
| 14) $a_N(t) = a_N(t-1) - \gamma_N(t-1)(e_N^f(t) + k_N(t-1)\rho\bar{\xi}_N(t))g_N(t-1)$ | $N+4$ | – |
| Dual Kalman gain: | | |
| 15) $\begin{bmatrix} g_N(t) \\ 0 \end{bmatrix} = g_{N+1}(t) - g_{N+1}^{N+1}(t) \begin{bmatrix} -b_N(t-1) \\ 1 \end{bmatrix}$ | $N$ | – |
| Backward filter: | | |
| 16) $b_N(t) = b_N(t-1) - \lambda_N(t)(e_N^b(t) + \rho\bar{\xi}_N(t))g_N(t)$ | $N+3$ | – |
| Time update of the filter $h_N(t)$: | | |
| 18) $e_N(t) = y(t) - h_N^T(t)x_N(t)$ | $N$ | – |
| 19) $\epsilon_N(t) = \gamma_N(t)e_N(t)$ | 1 | – |
| 20) $h_N(t) = h_N(t-1) - \epsilon_N(t)g_N(t)$ | $N$ | – |
| Total number of multiplications and divisions: | $8N+36$ | |

**Initialisation, stabilisation and optimisation issues related to the SFAEST**

The value of the forgetting factor $\lambda$ largely depends on the rate by which the input signal changes and defines the memory length of the algorithm. The eigenvalue spread of the weighted input covalence matrix given by

$$\mathbf{R}_N(t) = \sum_{\tau=0}^{t} \lambda^{t-\tau} \mathbf{x}_{N,\tau} \mathbf{x}_{N,\tau}^T \qquad (9)$$

plays an important part in determining $\lambda$. A suitable value could for example be $\lambda = 0.98$ but the type of the input signal needs to be considered and it is most likely that changing between static and dynamic users and static and dynamic channels will require different values for $\lambda$.

The choice for the variable $\rho$ is not straight forward and no direct rule for calculating an appropriate value exists. In [7] it is mentioned that a initialisation can be done by means of an estimate such as

$$\rho \approx \rho_0 \frac{\lambda}{1-\lambda} \text{ with } \rho_0 \approx 0.05. \qquad (10)$$

This could however not be confirmed by simulations carried out in the course of this work. Usually a value of $\rho = 1$ has been chosen but an adaptive estimation of $\rho$ during operation of the algorithm might prove advantageous. The most crucial parameters were found to be the forward/backward error powers. Initialisation has been done by means of the following rules:

$$\alpha_N^f(0) = \mu \lambda^N \qquad (11)$$

$$\alpha_N^b(0) = \mu \qquad (12)$$

As can be seen both error powers depend on the value $\mu$ and hence this parameter needs to be initialised with care. A typical, stable range for $\mu$ was found to be between $10 < \mu < 100$. From a stability point of view it is advantageous to monitor the evolution of the variable $\gamma_N(t)$. To prevent divergence of the algorithm, this variable should be restricted to values between 0 and 1. A recommended rule [7] to assure convergence is to reinitialise the algorithm when the condition

$$\xi_N^2(t) > \nu \alpha_N^b(t) \qquad (13)$$

becomes true, where $\nu$ is a small constant. This precaution will also take care of the case where the gain tends towards zero, hence $\gamma_N \rightarrow 0$.

**Fast Newton transversal filter**

The Fast Newton algorithm is an algorithm which can simplify the calculation of any of the above adaptive filter algorithms if the input signal can be modelled as an autoregressive filter with order less than is assumed by the above filters. Fast Newton transversal filters originate from the area of speech enhancement and echo cancellation. Their main feature is a fast calculation of the gain vector as required in many LS adaptive algorithms.

The stabilised fast Newton transversal filter (SFNTF) is essentially a computational accelerator for any least square (LS) algorithm. Operating as a "higher-level" adaptive predictor it can use any LS algorithm as a subroutine within its own algorithm. However, the order of this LS filter can be chosen to be smaller than the actual filter order of the SFNTF algorithm. A sophisticated predictor part then extrapolates the remaining filter coefficients to gain the complete set of filter coefficients as required according to the definition of the SFNTF length. It is this feature that should make the SFNTF a potentially attractive adaptive algorithm for many application and the usefulness of SFNTFs for advanced MUD receivers shall be examined in the future. As far as this report is concerned, we will however restrict ourselves to the description of the algorithm only.

To discuss the details of the SFNTF we will again list all variables as present in the algorithm with some words of explanation about the meaning of the variables. Table 4 lists these definitions.

Table 4:

| Variable definitions of the SFNTF algorithm. | |
|---|---|
| Variable Name | Definition |
| $x(t)$ | Filter input at time $t$ |
| $y(t)$ | Filter output, $y(t) = 0 \ \forall \ t < 0$ |
| $x_N(t)$ | Input vector $[x(t),...,x(t - N + 1]$ |
| $g_N(t)$ | Dual Kalman gain vector of order $N$ |
| $q_N(t),q_{N+1}(t)$ | temporary vectors to compute $g_N(t)$ in version 2 and 3. |
| $s_{P+1},u_{P+1}$ | temporary vectors to compute $g_N(t)$. |
| $a_N(t)$ | Forward predictor coefficients |
| $b_N(t)$ | Backward predictor coefficients |
| $h_N(t)$ | Filter coefficients |
| $R_N$ | Input sample covariance matrix |
| $r_N$ | Vector that builds $R_N$, see end of table. |
| $e_N(t)$ | A-priori filter error |
| $\varepsilon_N(t)$ | A-posteriori filter error |
| $e_N^f(t),\bar{e}_N^f(t)$ | Forward predictor error and its corrected version |
| $e_N^b(t),\bar{e}_N^b(t)$ | Backward predictor error and its corrected version |
| $\alpha_N^f(t)$ | Forward prediction error power |
| $\alpha_N^b(t)$ | Backward prediction error powerr |
| $\gamma_N(t),\gamma_{N+1}(t)$ | $0 \le \gamma_N(t) \le 1$ |
| $\theta_N(t)$ | |
| $\xi_N(t),\dot{\xi}_N(t)$ | Difference of errors and the corrected error difference |
| $\lambda$ | exp. forgetting factor $0 \le \lambda \le 1$ |

We can now describe the SFNTF with all its equations. For easier reading of the following equations, we first define two new vectors s and u:

$$\dot{s}_{P+1}(t) = \frac{1}{\lambda} \frac{e_P^f(t)}{\alpha_P^f(t-1)} \begin{bmatrix} 1 \\ -a_P(t-1) \end{bmatrix} \tag{14}$$

$$u_{P+1}(t) = \frac{1}{\lambda} \frac{e_P^b(t)}{\alpha_P^b(t-1)} \begin{bmatrix} -b_P(t-1) \\ 1 \end{bmatrix}, \quad t^0 = t - N \div P \tag{15}$$

Comparing these definitions with Equation 4, we notice the similarity with the updating part μ$x$e. While $\lambda$ represents the forgetting factor similar to μ, the second factor of Equations 14 and 15 are normalised error signals and the third factor, containing the vectors **a** and **b**, are similar to the input vector **x** of Equation 4. Note however that this is only a basic attempt to explain the nature of the vectors **s** and **u** and not a completely valid comparison - in particular with respect to the third factor. The vectors **a** and **b** represent the forward and backward predictor coefficients of the FNTF, respectively, and are computed by means of the sample covariance matrix **R**$_P$ by

$$a_P(t) = R_P^{-1}(t-1) \begin{bmatrix} x^1(t) \\ \vdots \\ x^P(t) \end{bmatrix} \tag{16}$$

and

$$b_P(t) = R_P^{-1}(t) \begin{bmatrix} x^P(t) \\ \vdots \\ x^1(t-P+1) \end{bmatrix}. \tag{17}$$

Their corresponding predictor error powers can then be defined as

$$\alpha_P^f(t) = x^0(t) - [x^1(\tau) \ldots x^P(t)]a_P(t) \tag{18}$$

and

$$\alpha_P^b(t) = x^0(t-P) - [x_1(t) \ldots x^P(t-P+1)]b_P(t) \tag{19}$$

As we notice from the definitions above, the SFNTF operates two separate predictor branches and by enabling or disabling those branches we can create three different versions of the algorithm:

**Version 1**: Using forward and backward predictors (not recommended)
Available values at time t: $g_N(t-1)$ and $\gamma_{N,P}(t-1)$
From SFAEST algorithm: $s_{P+1}(t)$, $e_P^f(t)$, $u_{P+1}(t^0)$ and $e_P^b(t^0)$

$$g_{N+1}(t) = \begin{bmatrix} 0 \\ g_N(t-1) \end{bmatrix} - \begin{bmatrix} s_{P+1}(t) \\ 0_{N-P} \end{bmatrix} \tag{20}$$

$$\begin{bmatrix} g_N(t) \\ 0 \end{bmatrix} = g_{N+1}(t) + \begin{bmatrix} 0_{N-P} \\ u_{P+1}(t^0) \end{bmatrix} \tag{21}$$

$$\gamma_{N,P}(t) = \gamma_{N,P}(t-1) + s_{P+1}^1(t)e_P^f(t) - u_{P+1}^{P+1}e_P^b(t^0) \tag{22}$$

**Verson 2**: Using only forward predictors
Available at time t: $q_N(t-1)$, $g_N(t-1)$
From SFAEST algorithm: $s_{P+1}(t)$, $e_P^f(t)$, $s_{P+1}(t^0)$, $e_P^f(t^0)$, $g_P(t^0)$, $\gamma_P(t^0)$

$$q_{N+1}(t) = \begin{bmatrix} 0 \\ q_N(t-1) \end{bmatrix} + \begin{bmatrix} s_{P+1}(t) \\ 0_{N-P} \end{bmatrix} \tag{23}$$

$$\begin{bmatrix} q_N(t) \\ 0 \end{bmatrix} = q_{N+1}(t) - \begin{bmatrix} 0_{N-P} \\ s_{P+1}(t^0) \end{bmatrix} \tag{24}$$

$$g_N(t) = \begin{bmatrix} 0_{N-P} \\ g_P(t^0) \end{bmatrix} - q_N(t) \qquad (25)$$

$$g_N(t) = g_N(t-1) + s^1_{P+1}(t)e^f_P(t) - s^1_{P+1}(t^0)e^f_P(t^0) \qquad (26)$$

$$\gamma_{N,P}(t) = \gamma_P(t^0) + g_N(t) \qquad (27)$$

**Version 3**: Using only backward predictors
Available at time t: $q_N(t-1), g_N(t-1)$
From SFAEST algorithm: $u_{P+1}(t)$, $e^b_P(t)$, $u_{P+1}(t^0)$, $e^b_P(t^0)$, $g_P(t^0)$, $\gamma_P(t^0)$

$$q_{N+1}(t) = \begin{bmatrix} 0 \\ q_N(t-1) \end{bmatrix} + \begin{bmatrix} u_{P+1}(t) \\ 0_{N-P} \end{bmatrix} \qquad (28)$$

$$\begin{bmatrix} q_N(t) \\ 0 \end{bmatrix} = q_{N+1}(t) - \begin{bmatrix} 0_{N-P} \\ u_{P+1}(t^0) \end{bmatrix} \qquad (29)$$

$$g_N(t) = \begin{bmatrix} g_P(t) \\ 0_{N-P} \end{bmatrix} - q_N(t) \qquad (30)$$

$$g_N(t) = g_N(t-1) + u^{P+1}_{P+1}(t)e^b_P(t) - u^{P+1}_{P+1}(t^0)e^b_P(t^0) \qquad (31)$$

$$\gamma_{N,P}(t) = \gamma_P(t) + g_N(t) \qquad$$

**Time update of the filter $h_N(t)$ :**
Available at time t: $h_N(t-1), x_N(t-1)$
New information.: $x(t), y(t)$

$$e_N(t) = y(t) - h^H_N(t-1)x_N(t-1) \qquad (32)$$

$$\varepsilon_N(t) = \frac{e_N(t)}{\gamma N, P(t)} \qquad (33)$$

$$h_N(t) = h_N(t-1) - \varepsilon_N(t)g_N(t) \qquad (34)$$

Predictor version 1 is more likely to diverge due to the fact that the calculation of $\gamma$ is not realised as a finite sum. Versions 2 and 3 include only a finite sum of P + 1 values in the computation of $\gamma$.
As the algorithm of Table 5 is rather complex and difficult to overview, we also include Table 6 which displays the variable occurences in the different equations of Table 5 and states which variables are required for updating other variables.

Table 5: Tasks of SFNTF with SFAEST in order of computation and number of required MUL/DIV operations

| SFNTF with SFAEST | MUL | DIV |
|---|---|---|
| Available at time $t$:<br>$\quad g_P(t-1),\ a_P(t-1),\ b_P(t-1),\ h_{N,t-1},\ x_P(t-1),$<br>$\quad \gamma_P(t-1),\ \alpha_P^f(t-1),\ \alpha_P^b(t-1)$ | | |
| New Information:<br>$\quad x(t),\ y(t)$ | | |
| Computation of the residuals and corrections:<br>A-priori forward/backward errors (residuals) | | |
| 1)  $e_P^f(t) = x(t) - a_P(t-1)^H x_P(t-1)$ | $P$ | - |
| 2)  $e_P^b(t) = x(t-N) - b_P(t-1)^H x_P(t)$ | $P$ | - |
| Normalisation parameters | | |
| 3)  $\gamma_{P+1}(t) = \frac{\lambda \alpha_P^f(t-1)}{\lambda \alpha_P^f(t-1)+\gamma_P(t-1)(e_P^f(t))^2}\gamma_P(t-1)$ | 4 | 1 |
| 4)  $\theta_P(t) = 1 + \gamma_{P+1}(t)e_P^b(t)(g_P^P(t-1) + \frac{e_P^f(t)}{\lambda \alpha_P^f(t-1)}a_P(t-1)^P)$ | 3 | 1 |
| 5)  $\gamma_P(t) = \frac{\gamma_{P+1}(t)}{\theta_P(t)}$ and $\gamma_P(t) = \frac{1}{1-g_P^b(t)x_P(t)}$ | - | 1 |
| 6)  $k_P(t-1) = \lambda^{-P}\gamma_P(t-1)a_P^P(t-1)$ | 2 | - |
| Difference of errors: | | |
| 7)  $\xi_P(t) = e_P^b(t) + k_P(t-1)e_P^f(t) + \lambda \alpha_P^b(t-1)g_P^P(t-1)$ | 3 | - |
| Difference of errors of corrected filters | | |
| 8)  $\bar{\xi}_P(t) = \frac{\xi_P(t)}{1+\rho(1-\gamma_P(t))+\alpha k_P^2(t-1)(1-\gamma_P(t-1))}$ | 4 | 1 |
| Corrected a-priori forward/backward errors | | |
| 9)  $\bar{e}_P^f(t) = e_P^f(t) - (1 - \gamma_P(t-1))k_P(t-1)\rho\bar{\xi}_P(t)$ | 3 | - |
| 10)  $\alpha_P^f(t) = \lambda \alpha_P^f(t-1) + \gamma_P(t-1)(\bar{e}_P^f(t))^2$ | 3 | - |
| 11)  $\bar{e}_P^b(t) = e_P^b(t) - (1 - \gamma_P(t))\rho\bar{\xi}_P(t)$ | 2 | - |
| 12)  $\alpha_P^b(t) = \lambda \alpha_P^b(t-1) + \gamma_P(t)(\bar{e}_P^b(t))^2$ | 3 | - |
| Time update of the *dual Kalman gain* $g_P(t)$:<br>Extended Kalman gain vector: | | |
| 13)  $g_{P+1,t} = \begin{bmatrix} 0 \\ g_P(t-1) \end{bmatrix} - \frac{\bar{e}_P^f(t)}{\lambda \alpha_P^f(t-1)}\begin{bmatrix} 1 \\ -a_P(t-1) \end{bmatrix}$ | $P+1$ | 1 |
| Forward filter: | | |
| 14)  $a_P(t) = a_P(t-1) - \gamma_P(t-1)(e_P^f(t) + k_P(t-1)\rho\bar{\xi}_P(t))g_P(t-1)$ | $P+4$ | - |
| Dual Kalman gain: | | |
| 15)  $\begin{bmatrix} g_P(t) \\ 0 \end{bmatrix} = g_{P+1,t} - g_{P+1,t}^{P+1}\begin{bmatrix} -b_P(t-1) \\ 1 \end{bmatrix}$ | $P$ | - |
| Backward filter: | | |
| 16)  $b_P(t) = b_P(t-1) - \gamma_P(t)(e_P^b(t) + \rho\bar{\xi}_P(t))g_P(t)$ | $P+3$ | - |
| Computation of dual Kalman gain for SFNTF: | | |
| 17)  see description of Version 1), 2) and 3) | 2 | |
| Time update of the SFAEST filter $h_P(t)$: (not required for SFNTF) | | |
| 18a)  $e_P(t) = y(t) - h_P^H(t)x_P(t)$ | $P$ | - |
| 19a)  $\epsilon_P(t) = \gamma_P(t)e_P(t)$ | 1 | - |
| 20a)  $h_P(t) = h_P(t-1) - \epsilon_P(t)g_P(t)$ | $P$ | - |
| Time update of the SFNTF filter $h_{N,t}$: | | |
| 18b)  $e_N(t) = y(t) - h_{N,t-1}^H x_{N,t-1}$ | $N$ | - |
| 19b)  $\epsilon_N(t) = e_N(t)/\gamma_N(t)$ [1] | - | 1 |
| 20b)  $h_{N,t} = h_{N,t-1} - \epsilon_N(t)g_{N,t}$ | $N$ | - |
| Total number of multiplications and divisions: | $8P + 2N + 39$ | |

Table 6: Variable occurrence in the SFAEST algorithm (Table 5).

Variables as function of $t\,/\,(t-1)$

| Equation in Table 3 | $x(t)$ | $x(t-P)$ | $x_P$ | $w_P$ | $w_{P+1}$ | $a_P$ | $b_P$ | $e_P^f$ | $e_P^b$ | $\alpha_P^f$ | $\alpha_P^b$ | $\gamma_P$ | $\gamma_{P+1}$ | $\theta_P$ | $k_P$ | $\xi_P$ | $\bar{e}_P^f$ | $\bar{e}_P^b$ | $\bar{\xi}_P$ |
|---|---|---|---|---|---|---|---|---|---|---|---|---|---|---|---|---|---|---|---|
| 1) | o | | −/o | | | −/o | | •/− | | | | | | | | | | | |
| 2) | | o | o/− | | | | −/o | •/− | | | | | | | | | | | |
| 3) | | | | | | | | o/− | | −/o | | −/o | | | •/− | | | | |
| 4) | | | −/o | | | −/o | | o/− | o/− | −/o | | | o/− | •/− | | | | | |
| 5) | | | | | | | | | | | | | •/− | o/− | o/− | | | | |
| 6) | | | | | | −/o | | | | | | −/o | | | | −/• | | | |
| 7) | | | −/o | | | | | o/− | o/− | | −/o | | | | | −/o | •/− | | |
| 8) | | | | | | | | | | | | o/o | | | | −/o | o/− | | •/− |
| 9) | | | | | | | | o/− | | | | −/o | | | | −/o | •/− | | o/− |
| 10) | | | | | | | | | | •/o | | −/o | | | | | o/− | | |
| 11) | | | | | | | | o/− | | | | o/− | | | | | | •/− | o/− |
| 12) | | | | | | | | | | | •/o | o/− | | | | | | o/− | |
| 13) | | | −/o | •/− | −/o | | | | | | | −/o | | | | | | o/− | |
| 14) | | | −/o | | •/o | | | o/− | | | | −/o | | | | −/o | | | o/− |
| 15) | | | •/− | o/− | | −/o | | | | | | | | | | | | | |
| 16) | | | o/− | | | | •/o | o/− | | | | o/− | | | | | | | o/− |
| # of variables required | 1 | 1 | 1 | 1 | 1 | 1 | 1 | 1 | 1 | 1 | 1/2 | 1 | 2 | 1 | 1 | 1 | 1 | 1 | 1 |

Legend:
- • = variable being updated
- o = value of variable required
- − = value not required
- ★/★ = describes the time step $t/t-1$ of variables .

Example: •/o for $b_P$ in Equation 16) denotes $b_P(t)$ will be updated and $b_P(t-1)$ is required.

**APPENDIX II**

**Multiuser detectors for CDMA**

**THE MMSE RECEIVER**

Consider the direct sequence spread spectrum system shown in Fig. 6.

In it we have $M$ ($m$ = 1 to $M$) users, each transmitting a PN code of length N chips ($n$ = 1 to $N$). We assume that all the users are both data bit and chip synchronous and that the data modulation $D_m$ and the codes $C_{mn}$ take the values $\pm 1$. The signal at the input to the receiver at chip $n$ is therefore:-

$$y(n) = \sum_{m=1}^{M} D_m C_{mn} + W(n) \qquad \{1\}$$

$W(n)$ is the noise sample at chip $n$. Wiener filter theory [1], [15] states that the optimal set of weights for an FIR filter $h_{opt}$ is given by:-

$$\bar{h}_{opt} = \underline{\varnothing}_{yy}^{-1} \bar{\varnothing}_{yx} \qquad \{2\}$$

$\underline{\varnothing}_{yy}$ is the autocorrelation matrix of the input signal and for a stationary input:-

$$\underline{\varnothing}_{yy} = E \begin{bmatrix} y^2(n) & y(n)y(n-1) & .. & y(n)y(n-N) \\ y(n)y(n-1) & y^2(n) & .. & y(n)y(n-N+1) \\ y(n)y(n-2) & y(n)y(n-1) & .. & y(n)y(n-N+2) \\ . & . & & . \\ . & . & & . \\ y(n)y(n-N) & y(n)y(n-N+1) & .. & y^2(n) \end{bmatrix} \qquad \{3\}$$

where $E[x]$ denotes the expected value of $x$. We are interested in the FIR filter when it contains no data transitions, ie when it only has one data bit from each user in it. Assuming that the data modulation on each code is independent, ie $E(D_a D_b) = 0$, $A \neq B$ by direct substitution of equation {1} into equation {3} or analogy with the spatial radar case [16], [17] it can be shown that

$$\underline{\varnothing}_{yy} = \underline{Q}\Lambda\underline{Q}^T + \sigma^2 I \qquad \{4\}$$

The matrix $Q$ has dimension $NxM$ and has the codes as its columns, ie:-

$$Q = \begin{bmatrix} C_{11} & C_{21} & C_{31} & . & . & C_{M1} \\ C_{12} & C_{22} & C_{32} & . & . & C_{M2} \\ C_{13} & C_{23} & C_{33} & . & . & C_{M3} \\ . & . & . & . & . & . \\ . & . & . & . & . & . \\ C_{1N} & C_{2N} & C_{3N} & . & . & C_{MN} \end{bmatrix}$$

$Q^T$ denotes the transpose of matrix $Q$. The matrix $\underline{\Lambda}$ has dimensions $MxM$ and has $P_m$ at position m along its leading diagonal and is zero elsewhere. $P_m$ is the power at the receiver of user $m$. For the rest of the section we shall assume $P_m = 1$ for all $m$, ie perfect power control with the power of each user normalised to 1. The $\sigma^2 I$ term is the noise term assuming the noise power is $\sigma^2$ and the noise is uncorrelated.

The vector $\varnothing_{xy}$ is given by:-

$$\bar{\varnothing}_{xy} = E\left[ x(n) \begin{bmatrix} y(n) \\ y(n-1) \\ y(n-2) \\ \cdot \\ \cdot \\ y(n-N) \end{bmatrix} \right] \qquad \{5\}$$

$x(n)$ is the desired response. We are only interested in the response when the FIR filter contains the chips from one data bit, ie when $n = 0$ and at that point the desired response is the data bit for the desired code. Assuming the desired code is $m = 1$ then $x(n) = D_1$. Substituting this and equation $\{1\}$ into equation $\{5\}$ and assuming the the data symbols are uncorrelated yields:-

$$\bar{\varnothing}_{xy} = \begin{bmatrix} C_{11} \\ C_{12} \\ C_{13} \\ \cdot \\ \cdot \\ C_{1N} \end{bmatrix} \qquad \{6\}$$

Thus the vector $\varnothing_{xy}$ is the desired code. From equations $\{1\}$, $\{3\}$ and $\{6\}$, and under the assumptions that we have stated, the optimum mean squared error performance is only dependent on the code set chosen. The minimum mean squared error at the FIR filter output is given by:-

$$\varepsilon_{min} = E[x^2(n)] - \bar{h}_{opt}^T \bar{\varnothing}_{xy}$$

We can define the output signal to noise ratio for the filter as:-

$$\left(\frac{S}{N}\right)_{out} (dB) = 10 \log_{10}\left(\frac{P_1}{\varepsilon}\right)$$

Assuming that the channel bandwidth in Hz is equal to the chip rate in chips per second then we can use the energy per bit $E_b$ divided by the noise power spectral density $N_0$ as a processing gain independent measure of the signal to noise ratio at the input to our FIR filter. In our case:-

$$\frac{E_b}{N_0} = \frac{1}{N\sigma^2}$$

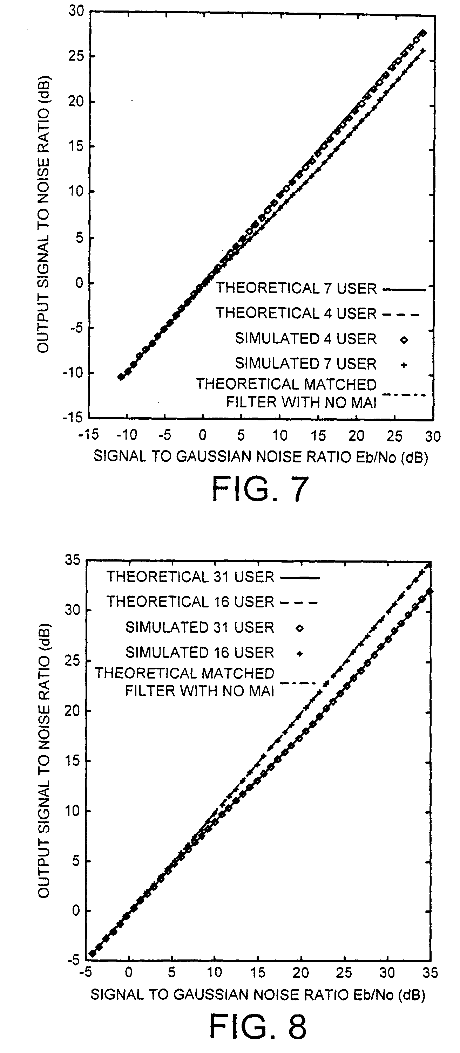

Figs. 7, 8, 9 and 10 show the theoretical and simulated performance of the Wiener filter calculated as above for a set of 7 and 31 chip Gold codes. Fig. 7 shows the theoretical and simulated performance of the 7 chip Gold codes in terms of the output signal to noise ratio from the Wiener filter. Fig. 7. shows that the performance of the optimal filter with 4 users is practically the same as the performance of a matched filter with no MAI. Looking at the data, at 10 dB output signal to noise ratio, the difference between the 4 user curve and the matched filter curve is around 0.3 dB. From Fig. 7, to have 7 users in a system with a processing gain of 7 we must have an increase of around 1.8 dB in $E_b/N_0$ to achieve the same performance as a matched filter with no MAI. These figures are again measured with 10 dB as the required output signal to noise ratio.

Fig. 8 shows theoretical and simulated performance of the 31 chip Gold codes in terms of the output signal to noise ratio from the Wiener filter. With 16 users, we require around a 0.1 dB increase in $E_b/N_0$ over the matched filter with no MAI. This is better than the 4 users, 7 chip case, partly because 4/7 is greater than 16/31. When there are 31 users in a 31 chip system, the required increase in $E_b/N_0$ is 1 dB over the matched filter with no MAI. It would appear that the 31 chip system enjoys some inherent advantage over the 7 chip system, probably due to the greater degree of statistical orthogonality between the 31 chip codes when compared with the 7 chip case. However, other factors such as the choice of the desired user or the choice of the code sets cannot be ruled out.

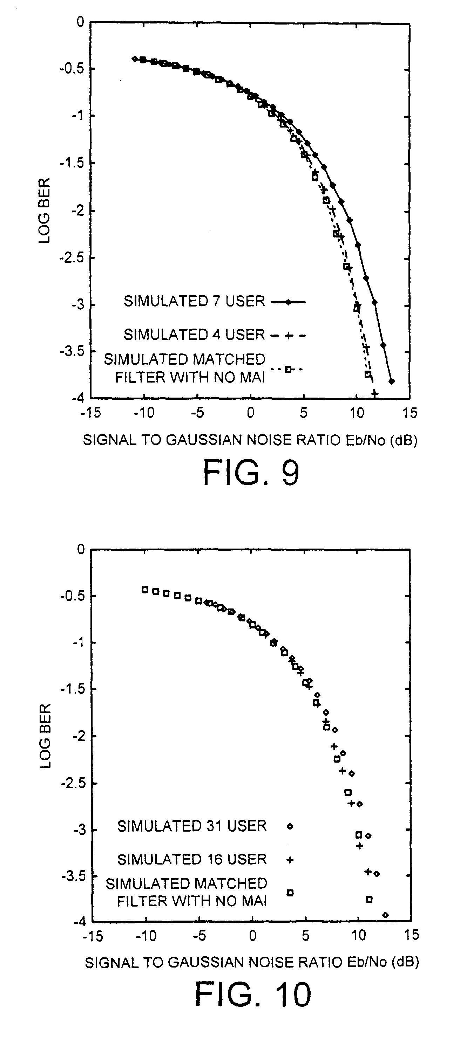

Figs. 9 and 10 show the simulated bit error rate (BER) performance of the 7 and 31 chip codes. These graphs show similar results to Figs. 7 and 8 in terms of the increase in $E_b/N_0$ required to accommodate more users. A good approximation to Figs. 9 and 10 can be derived from Figs. 7 and 8 assuming that because of the central limit theorem the noise output from the Wiener filters is Gaussian.

**Adaptive filter receivers**

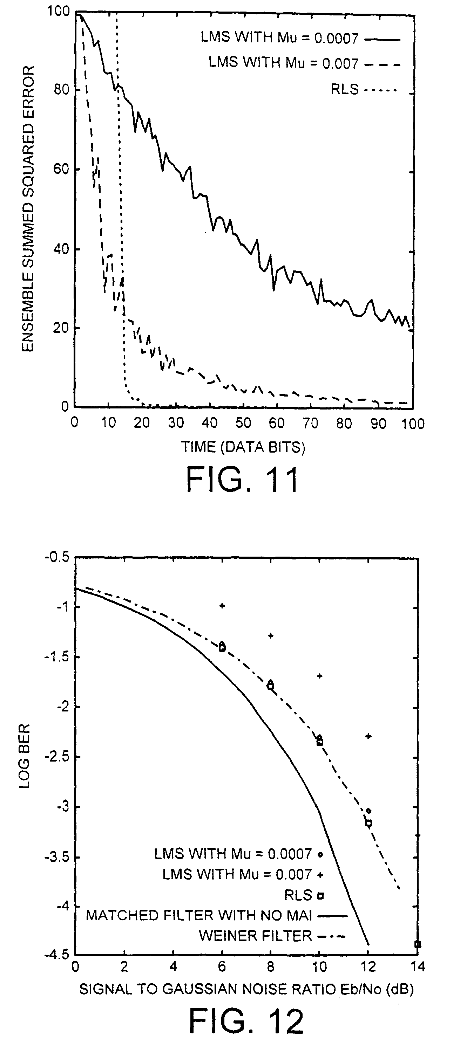

In most cases the DS-CDMA channel is non-stationary and as we have already stated the MAI will vary with the birth and death of signals. Therefore the FIR filter used in our receiver has to be a time varying approximation to the Wiener filter calculated using an adaptive algorithm. We will consider the properties of the two most popular adaptive algorithms, least mean squares (LMS) and recursive least squares (RLS) [1]. We shall use the 7 chip Gold code case as our example, as the 31 chip case would involve considerable extra computation. Fig. 11 shows the convergence properties of the LMS algorithm with two different values of the adaption parameter $\mu$. The graphs show the feedback error ensemble summed over 100 independent trials. With $\mu = 0.007$ the algorithm converges to 20% of its initial value within approximately 20 data bits, but with $\mu = 0.0007$ convergence takes around 100 data bits. In a DS-CDMA cellular system, where the channel varies relatively quickly with respect to the data rate of a single user, this slow convergence will not be acceptable. Fig. 12 shows the BER performance of the LMS algorithm after convergence with the same values of $\mu$ as for Fig. 11. It shows that the smaller value of $\mu$ produces a good approximation to the Wiener filter, but the performance of the LMS algorithm with the larger value of $\mu$ is around 2 dB worse in terms of the required signal to noise ratio for a bit error rate of $10^{-3}$. Thus it is difficult to find a value of $\mu$ which will provide a fast enough convergence without introducing a large residual error into the performance of the filter, even for the 7 chip case. The convergence time will be greater if the codes are longer. If we consider a DS-CDMA cellular system with imperfect power control and a multipath channel, then the eigenvalue spread of the input signal will be increased. This will also have an adverse effect on the convergence time of the LMS algorithm. More evidence of this is contained in [18]. Thus the LMS algorithm is unsuitable for this application. Also shown in Fig 11 is the convergence of an RLS algorithm with $\lambda = 1$ and the diagonal elements of the autocorrelation matrix initially set to 0.001. This shows typical behaviour for an RLS algorithm, rapid convergence by 2$N$. The RLS curve in Fig. 12 shows that the RLS algorithm does not add any significant residual error to the Wiener filter solution. Thus the RLS algorithm is potentially more suited to a DSCDMA cellular system.

**Discussion**

In this section we shall look at the assumptions made in the derivation of the filters and look at applying this type of receiver to a cellular system.

We have assumed that all the channels are data bit and chip synchronous. If the channels are not chip synchronous, provided the receiver samples the desired channel synchronously, any change is likely to be beneficial as the effective MAI will be reduced. If the channels are not data bit synchronous however, the effect is greatly dethmental. With transitions of the interfering channels occurring in the middle of the desired channel data bits, each interfering channel requires two eigenvectors in the $Q$ matrix. Thus performance is reduced and the system breaks down when the number of users exceeds 0.5N instead of $N$ for the data bit synchronous case. An interesting case is when the data bits are almost synchronous, for example as synchronous as the transmission delays in the system will allow. In this case, it may be possible to ensure that any transition occurs a small number of chips (compared with $N$) from the beginning or end of the desired user's data bit. In this case the detrimental effect may not be so great, although this hypothesis remains unproven. We have also assumed perfect power control. There is some evidence that this type of adaptive filter structure is tolerant to variations in the power of the received codes [19]. The last assumption we made is that the data bits are uncorrelated. Provided that the signals are independently generated, idle channels are suppressed and that care is taken over the content and timing of control information, this should be a reasonable assumption.

If we are to apply this receiver structure to a cellular DS-CDMA system we need to take into account the non-stationary multipath channel and the birth and death of users. To take into account the multipath channel, we can use the technique in [20], replacing the impulse response of the spreading process $C_{mn}$ with $B_{mn}$, where $B_{mn}$ is the convolution of the impulse response of the channel with the impulse response of the spreading process and repeat the analysis. This paper already describes the theoretical optimal with multipath evaluated for all users of the system simultaneously. The non-stationary elements of the channel can be taken into account by blocks of training data with or without decision feedback in between. The birth and death of signals problem will be greatly alleviated if all users are constrained to switch on and off only immediately proceeding a training block. The convergence and tracking properties of the adaptive algorithm and speed at which the channel varies will determine the length and frequency of the training blocks. However, by employing the RLS algorithm (or the covariance form of the least squares algorithm on training blocks [1]), the ratio of training data to information carrying data can be kept reasonable.

Some desirable properties of this receiver are that it does not require to know the desired or the interferers spreading codes, provided the training data is known and its adaptive nature will allow it to reduce the effect of strong interferers from neighbouring cells and local narrow band interference.

## Conclusions

We have shown that an FIR filter can be used to separate a desired signal from MAI in a DS-CDMA system with only a small degradation in Gaussian noise performance. These filters can be approximated by trained adaptive filters. These sub-optimal filters may make practical receivers for a DS-CDMA cellular system.

## THE DECORRELATING RECEIVER

The decorrelating detector is similar to the MMSE detector except that the noise term is not taken into account ie. the second term in equation {4} above is neglected in the formulae for $\underline{\emptyset}_{yy}$.

## RADIAL BASIS FUNCTION RECEIVERS

*Introduction:* In many DS-CDMA communications systems there are three sources of distortion when the signal arrives at the receiver, structured multiple access interference (MAI) from other users in the system, Gaussian noise which can often be extended to include unstructured interference and time dispersion due to multipath propagation. The simplest DS-CDMA receiver structures are based on matched filters for a non-dispersive channel and RAKE receivers for multipath channels. The MAI performance of matched filter/RAKE receivers can be enhanced by applying cancellation at the expense of increased receiver complexity [12]. Many proposed receiver structures are based on linear equaliser structures. Examples include decorrelating receivers which are based on the zero-forcing equaliser and those based on the MMSE equaliser [21]. We shall compare the above receiver structures with the RBF receiver. This nonlinear receiver minimises the probability of error when deciding on a data bit. It has already been shown that an RBF equaliser has superior performance to a linear equaliser in multipath channels for conventional minimum bandwidth signalling [22] and that an RBF filter has superior performance to a MMSE filter in a non-dispersive CDMA system [23] . We shall show that the RBF based receivers have the ability to considerably increase the capacity of a DS-CDMA system when compared with other receiver structures.

*AWGN channel system model:* To enable us to compare the wide variety of receivers discussed above we shall first consider an additive white Gaussian noise channel. Our system will consist of $U$ independent users each transmitting a DS-CDMA signal which is chip and bit synchronous and with all users transmitting equal power normalised to 1. The data bit transmitted by user $u$ during bit time $k$ will be denoted by $D_u(k)$ and the spreading code for user $u$ by $C_{u,n}$. We will use $n$ to denote the chip number within the code which is an integer between 0 and ($N$-1) where $N$ is the spreading sequence length (processing gain). The spreading codes used throughout are 7 chips long and randomly generated. Without loss of generality we can assume that the desired user is user 0. The channel model will be a simple additive white Gaussian noise (AWGN) model with the noise time series denoted by $G(kN + i)$. Thus the chip rate signal arriving at the receiver, denoted $Y(kN + i)$, will be:-

$$Y(kN + i) = \sum_{u=0}^{U-1} D_u(k)C_{u,i} + G(kN + i)$$

at the point where data bit $k$ chip $i$ is received. In the AWGN case there is no need to consider $i$ outside the range $0 \leq i < N$ as outside this time the signal will contain no useful information relating to data bit $k$.

*AWGN channel receiver structures:* We shall consider three main receiver structures, matched filtering, the MMSE receiver and the RBF receiver. In all cases we shall assume that the codes and the signal powers are known at the receiver. In the non-dispersive case the matched filter receiver is given by an $N$ tap FIR filter whose co-efficients $H_i$ are the spreading code for the desired receiver i.e.

$$H_i^{MF} = C_{0,i}$$

The MMSE receiver is also an N tap FIR filter, but the co-efficients of this filter are given (in vector form) by [24] :-

$$H^{MMSE} = \underline{\Phi}_{yy}^{-1} \underline{\Phi}_{yx}$$

$\underline{\Phi}_{yy}$ is the autocorrelation matrix of the cyclostationary input signal with dimensions *NxN*. $\underline{\Phi}_{yx}$ is the cross correlation vector. The RBF receiver is a nonlinear filter whose estimate of the data output is given by:-

$$\hat{D}_0 = sgn \sum_{i=1}^{n_c} w_i \exp\left(-\frac{\left(|\underline{y}(k) - \underline{c}_i|^2\right)}{2\sigma^2}\right)$$

where $\underline{v}(k)$ denotes the input vector consisting of the *N* chip spaced input samples at data bit time *k* and $\underline{c}_i$ are the centres. The centres are the noise free input vectors for all possible input data bit combinations. There are therefore $n_c = 2^U$ centres. |.| denotes the length of the enclosed vector (Euclidean norm). σ is the standard deviation of the noise. $w_1$ is the value of $D_0$ associated with centre $c_i$. In our simulations we shall assume that the centres and weights are known at the receiver. For all three receiver cases we shall also consider supplementing the receiver with a single stage of parallel cancellation similar to [12].

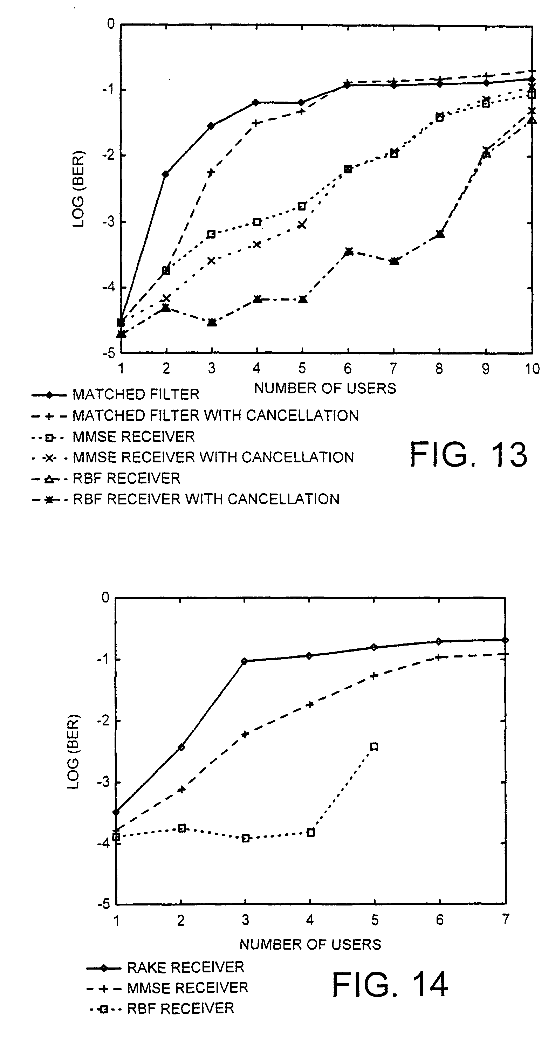

*AWGN channel simulation results:* The receiver structures above were simulated using Monte-Carlo simulation. The graphs show the $\log_{10}$ of the BER averaged over all active users in the system plotted against the number of active users. Fig. 13 shows results for $E_b/N_0$ = 9 dB. These figures show that the performance of matched filtering becomes poor as the MAI (the number of active users) increases. The number of active users which gives an acceptable BER for a matched filter receiver improves considerably with the addition of cancellation, as this filter is clearly interference limited. The MMSE receiver performs better than both the matched filter and the matched filter with cancellation. It too improves with the addition of cancellation, although the improvement is not as great as adding cancellation to a matched filter. The RBF receiver is considerably better than both the matched filter and the MMSE receiver, with or without cancellation. However, the RBF receiver is not improved by the addition of cancellation. This is because in this scenario the RBF is the maximum likelihood receiver and therefore cancellation cannot improve its performance.

*Multipath channel system model*: We shall now consider a stationary multipath channel model. The channel we shall consider has impulse response:-

$$M(z) = 0.3482 + 0.8704z^{-1} + 0.3482z^{-2}$$

All signals are assumed to pass through the same channel, as would be the case in the downlink of a mobile radio system. The received signal at the time data bit *k*, chip *i* is received by the direct path and therefore becomes:-

$$Y(kN + i) = 0.3482\left(\sum_{u=0}^{U-1} D_u(k)C_{u,i} + G(kN + i)\right) \div$$

$$0.8704\left(\sum_{u=0}^{U-1} D_u(k)C_{u,i-1} + G(kN + i - 1)\right) + 0.3482\left(\sum_{u=0}^{U-1} D_u(k)C_{u,i-2} + G(kN + i - 2)\right)$$

Note that if *i-x* is negative then the $D_u(k)C_{u,i-x}$ is replaced by $D_u(k-1)C_{u,N+1-x}$ and if *i* or *i-x* is greater than *N* (if we extend the receiver filter length beyond *N*) then $D_u(k)C_{u,1-x}$ is replaced by $D_u(k+1)C_{u,1-N-x}$. This is a direct illustration of ISI caused by the multipath channel.

*Multipath channel receiver structures:* We shall base all our new receiver structures on a new set of input signal samples *y(kN+i)* where the range of *i* is extended to 0≤*i*<*N*+2 to capture all the signal energy that originated from data bit *k*. This combined with the multipath channel will result in ISI from both the preceding and following data bit. The equivalent of the matched filter for a multipath channel is an FIR filter with N+2 taps where the taps are given by:-

$$H^{RAKE} = \underline{c}_0{}^*M$$

The * represents convolution and $\underline{c}_0$ and *M* represent the spreading code of user 0 and impulse response of the channel respectively. The MMSE receiver coefficients are given by the same equation as before, however, the elements of the ($(N+2)$x$(N+2)$) autocorrelation matrix $\Phi$ and the ($N+2$) cross correlation vector must be calculated according to the derivation of the MMSE receiver taking into account the multipath. The RBF receiver equation is also essentially unchanged, except now the input and centre vectors are of length $N+2$ and the number of centres is now $2^{3U}$ as all possible combinations of the previous, current and next data bit must be considered. This number of centres increases rapidly with the number of active users U and the computational load will rapidly become impractical.

*Multipath channel simulation results:* Graphs for the BER performance of the receiver structures described in the previous section are shown in Fig. 14 for $E_b/N_0 = 9$ dB. These graphs show similar trends to the nondispersive case. The RAKE receiver rapidly breaks down as the MAI interference increases because the interfering users are not taken account of at all in the RAKE receiver and are therefore treated as unstructured noise. The MMSE receiver does considerably better than the RAKE receiver. The RBF receiver performs better than either the RAKE receiver or the MMSE receiver. However, it does involve a considerable increase in computational complexity. The RBF results are truncated at 5 users because the calculation of 6 users would require evaluating the Euclidean distance from $2^{18}$ centres for every data bit sent.

*Discussion and Conclusions:* We have shown that an RBF receiver has greatly improved performance over the more conventional matched filter and MMSE based receiver structures. This performance increase is apparent in both AWGN and multipath channels. However the computational complexity and the number of variable parameters in a non-stationary environment presently make the RBF filter receiver impractical for mobile radio applications.

## NEAR OPTIMUM RECEIVERS

Near Optimum receivers use similar methods to the Radial Basis Function receiver, usually with simplifications to the Radial Basis Function by dropping the exponential term and simplifying the Euclidean difference expression. These receivers can be implemented at the chip level or the bit level (after preprocessing) and often involve the Viterbi forward programming algorithm to search for the optimum centre (path in the Viterbi algorithm).

## CANCELLATION BASED RECEIVERS

The optimal receiver for a direct sequence code division multiple access (DS-CDMA) system is the maximum likelihood sequence estimator [25] [14] which is effectively an RBF receiver with infinite memory. However, this receiver's complexity rises exponentially with the number of users and is therefore impractical. At the other end of the complexity scale, a matched filter is commonly used as the receiver in a DS-CDMA system. A matched filter is the optimal receiver only in additive white Gaussian noise (AWGN) and has very poor performance when the level of multiple access interference (MAI) from other users in the system is high.

Between these two extremes a range of sub-optimal receiver structures have been proposed. The majority of these can be split into two types. Cancellation structures are typically based on matched filtering followed by subtraction of the matched filter output from a delayed version of the input signal [12][26][27]. Equaliser structures use a linear or decision feedback FIR filter with the co-efficients optimised according to varying criterion such as minimum mean square error (MMSE) or zero-forcing [18][20][28]. A comprehensive review of this area and a reference list can be found in [21].

In this section the performance of a Wiener filter receiver is compared with that of a simple parallel canceller. The combination of the two techniques is also examined.

## System description

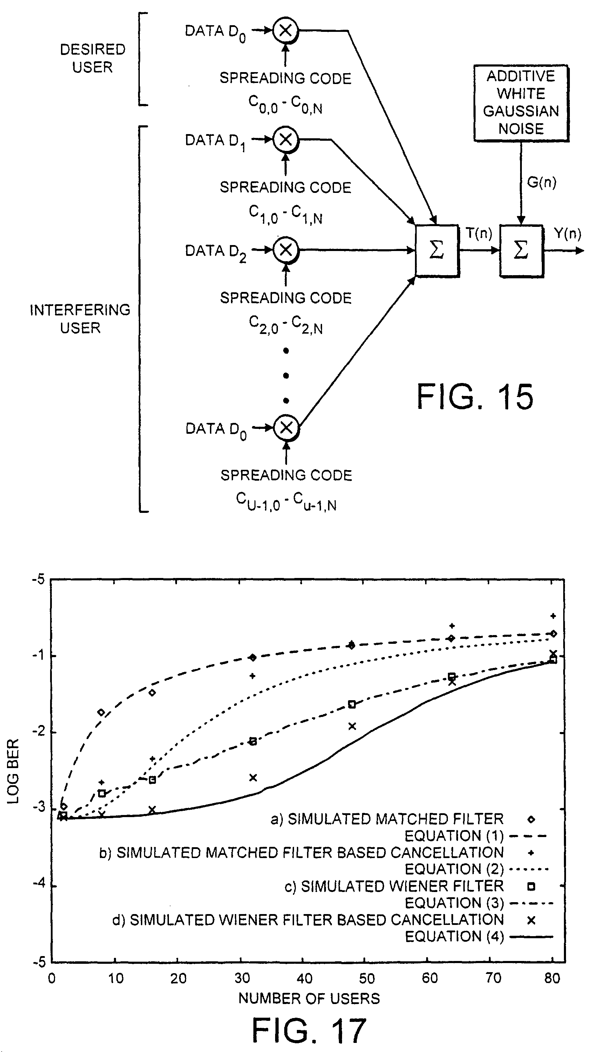

The system to be considered consists of $U$ independent equal power users transmitting both data bit and chip synchronously as shown in Fig. 15. The data bit transmitted by user $u$ at bit time $k$ will be denoted by $D_u(k)$ and the spreading code for user $u$ will be denoted by $C_{u,n}$. n denotes the chip within the code which is an integer between 0 and ($N$-1) and $N$ is the spreading sequence length (processing gain). The spreading codes used as an example throughout this paper are 64 chips long and randomly generated. Orthogonal (Walsh) or semi-orthogonal (Gold) codes would give better performance, but would require longer simulation times to give meaningful BER results. In many communications systems the channel will destroy the orthogonality property of orthogonal codes anyway. Throughout this paper the chip and data values will be normalised to $\pm 1$. Without loss of generality we can assume that the desired user is user 0. The channel under consideration will be a simple AWGN channel with the noise denoted by $G(kN+n)$ having variance $\sigma^2$. Thus the chip rate signal arriving at the receiver, denoted $Y(kN+n)$, will be:-

$$Y(kN + n) = \sum_{u=0}^{U-1} D_u(k)C_{u,n} + G(kN + n)$$

**Receiver structures and theoretical performance**

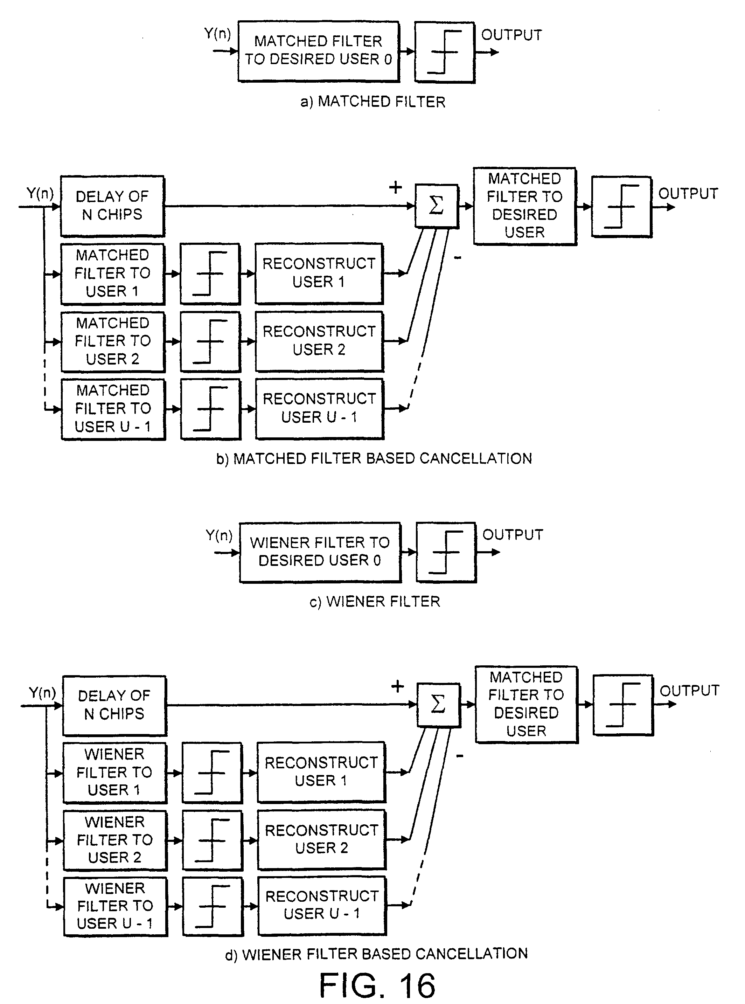

The four receiver structures shown in Fig. 16 will be examined, Receiver structure a) is the simple matched filter case. The receiver consists of an $N$ tap FIR filter whose co-efficients $h_n$ are a scaled version of the desired user's code, ie:-

$$h_n = \frac{C_{0,n}}{N}$$

The matched filter treats the MAI as noise and therefore, if the signal power of each user is one and the codes are random, the central limit theorem allows us to approximate the BER for this receiver as:-

$$BER_{mf} = \text{erfc}\left(\sqrt{\frac{N}{\sigma^2 + (U-1)}}\right) \qquad (1)$$

where erfc() is the complimentary error function.

Receiver structure b) is a simple parallel canceller using matched filters to despread each interfering signal and reconstruct a replica which is subtracted from an appropriately delayed input signal, cancelling much of the interference. The remaining signal is then despread using a matched filter to the desired user. The reconstruction of the signal assumes that the power of the signal is known exactly. Therefore an interfering signal which is is received with the correct sign will be cancelled exactly and an interfering signal received incorrectly will have its amplitude doubled (power quadrupled). A lower bound on the BER for this structure is given by:-

$$BER = \text{erfc}\left(\sqrt{\frac{N}{\sigma^2 + BER_{mf}(4.0)(U-1)}}\right) \qquad (2)$$

This equation is only a lower bound for two reasons. Firstly the noise samples for each matched filter in the cancellation stage are the same, whereas the above equation assumes they are independent samples. Secondly, after cancellation the combined interference plus noise distribution of the remaining signal is a poor approximation to Gaussian because it consists of the Gaussian noise and a limited number of enlarged interferering signals which will be a poor approximation to a Gaussian distribution.

Receiver structure c) is the Wiener, Levinson or MMSE producing filter [15][1]. It is also an $N$ tap FIR filter, but the co-efficients of this filter are given (in vector form) by [24] :-

$$\underline{h} = \underline{\Phi}_{yy}^{-1}\underline{\Phi}_{yx}$$

where

$$\underline{h} = [h_0, h_1, h_2 \cdots h_{N-1}]^T$$

The $T$ superscript denotes a matrix transpose. $\underline{\Phi}_{yy}$ is the autocorrelation matrix of the input signal with dimensions $NxN$, given by:-

$$\underline{\Phi}_{yy} = \underline{Q}\underline{Q}^T + \sigma^2\underline{I}$$

The matrix $\underline{Q}$ has dimensions $NxU$ and has the codes as its columns, ie:-

$$
\underline{Q} = \begin{bmatrix}
C_{0,0} & C_{1,0} & C_{2,0} & . & . & C_{U-1,0} \\
C_{0,1} & C_{1,1} & C_{2,1} & . & . & C_{U-1,1} \\
C_{0,2} & C_{1,2} & C_{2,2} & . & . & C_{U-1,2} \\
. & . & . & . & . & . \\
. & . & . & . & . & . \\
C_{0,N-1} & C_{1,N-1} & C_{2,N-1} & . & . & C_{U-1,N-1}
\end{bmatrix}
$$

$\underline{I}$ is the $NxN$ identity matrix. $\underline{\Phi}_{yx}$ is the cross correlation vector:-

$$
\underline{\Phi}_{yx} = [C_{0,0}, C_{0,1}, C_{0,2} \cdots C_{0,N-1}]^T
$$

The MMSE is given by:-

$$
MMSE = 1 - \underline{h}^T \underline{\Phi}_{yx}
$$

and the BER performance (derivation A) is:-

$$
BER_{Wiener} = \mathrm{erfc}\left( \sqrt{\left( \frac{(\underline{h}^T \underline{\Phi}_{yx})^2}{-(\underline{h}^T \underline{\Phi}_{yx})^2 + (2.0)\underline{h}^T \underline{\Phi}_{yx} - 1.0 + MMSE} \right)} \right) \tag{3}
$$

To obtain average BER performance, this equation must be averaged over all the users in the system to give $BER_{Wiener}$.

Receiver structure d) is a parallel canceller using Wiener filters for the initial estimate of the interferers data bits. By analogy with equation 2, a lower bound on the BER performance of this structure is given by:-

$$
BER = \mathrm{erfc}\left( \sqrt{\frac{N}{\sigma^2 + \overline{BER}_{Wiener}(4.0)(U - 1)}} \right) \tag{4}
$$

**Results**

All simulated results in this section are for 60,000 data bits, with the BER averaged over all users. Graphs show the average BER for all users in the system plouted against number of users. The sequence length is 64. The signal to Gaussian noise ratio is exoressed as:-

$$
E_b/N_0 = \frac{N}{2\sigma^2}
$$

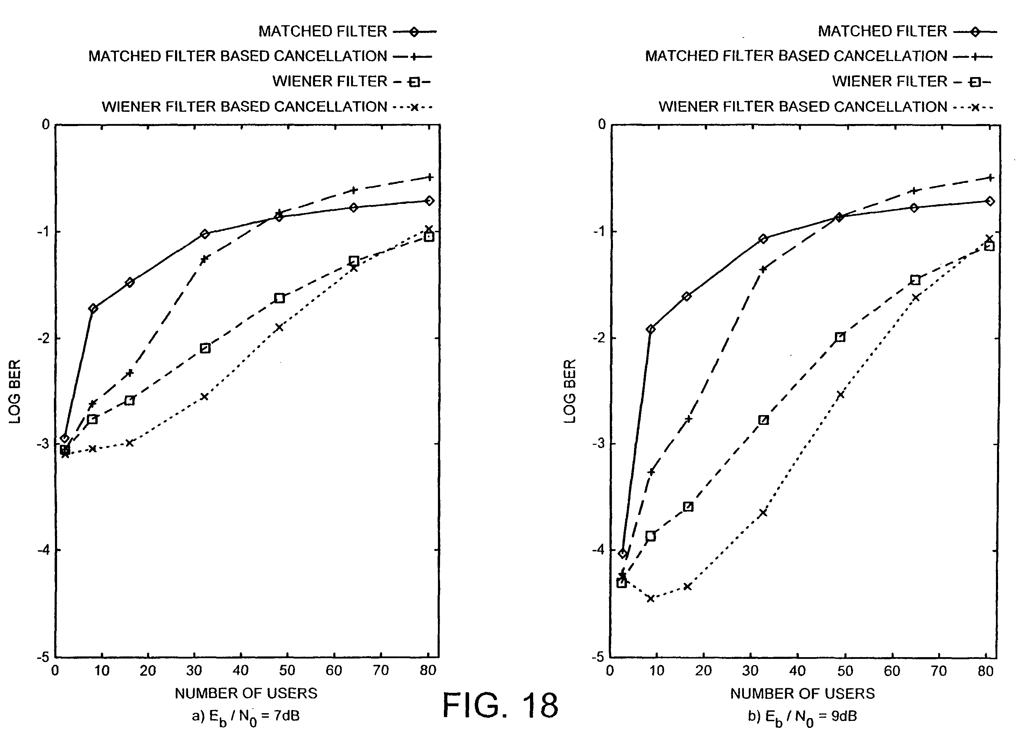

Fig. 17 shows a comparison between the theoretical results derived in above and simulation results. The results show that equations (1) and (3) give good and unbiased estimates of the simulated results for the matched filter and Wiener filter respectively. The deviation of the simulated results for the matched filter from equation (1) with a low number of users is caused by the interference distribution only being approximately Gaussian and the limited number of simulated points. Equations (2) and (4) however only give an approximation to the actual performance of the two cancellation receivers. This estimate is biased towards a lower BER for reasons that were discussed above.

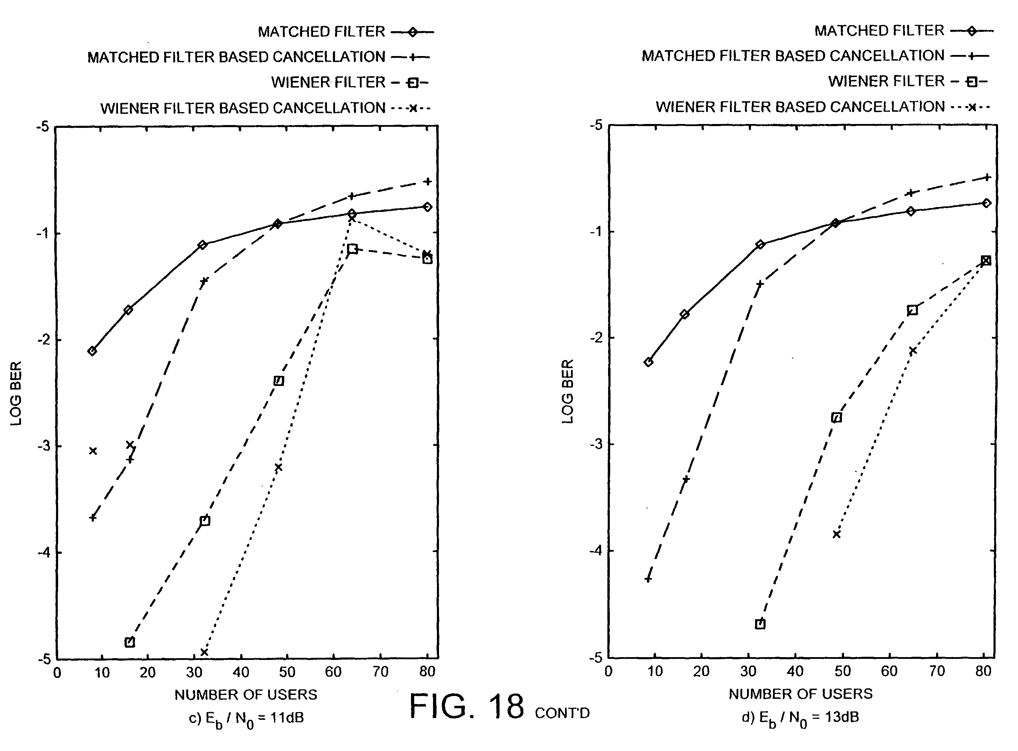

Fig. 18 shows simulated results for a range of signal to noise ratios. These results show that a matched filter is only a good receiver structure when Gaussian noise is the dominant source of interference. This only applies when there are very few interfering users and the signal to noise ratio is low.

A single stage of parallel cancellation based on matched filters performs better than a matched filter except at extremely high levels of interference, where the BER is too low for most communications systems anyway. The improvement is fairly significant, with $E_b/N_0$ = 9 dB, the cancellation receiver can support three times as many users as the matched filter if the required BER is $10^{-2}$.

The Wiener filter will always perform better than the matched filter. The only case where the performance of these two receiver systems is the same is when there is no MAI interference and the Wiener filter becomes a scaled version of the matched filter. The Wiener filter also performs significantly better than the matched filter based cancellation receiver. With $E_b/N_0$ = 9 dB and a required BER of $10^{-2}$, the Wiener filter will allow approximately six times as many users as a matched filter and twice as many as the matched filter based cancellation receiver. The computational complexity of the Wiener filter receiver is identical to the matched filter receiver, and significantly less than the matched filter based cancellation receiver. This assumes that the Wiener co-efficients are calculated in advance.

The Wiener filter based cancellation receiver gives the best performance of all. It will allow approximately seven times the number of users if $E_b/N_0$ = 9 dB and the required BER is $10^{-2}$, compared with the matched filter receiver.

Note that in all cases there is a significant variation in performance between users. For example, using the Wiener filter receiver with 48 users and $E_b/N_0$ = 9 dB, the average BER is 0.00940 but the user with the best spreading sequence experiences a BER of 0.001167 and the user with the worst spreading sequence experiences a BER of 0.038092. This variation is due to the cross correlation properties of the code set and will also apply to an orthogonal code set which has lost its orthogonality due to a multipath channel.

**Discussion and Conclusions**

In this paper we have shown that cancellation and Wiener filtering both perform much better in MAI than a simple DMF. Wiener filters in particular offer a large increase in the number of users that can be accommodated. The two ideas can be successfully combined and provide a better performance than either on its own.

There is a cost to pay for improved performance. The cancellation receiver introduces a delay of one data bit and requires a substantial increase in either computation or hardware. Both the Wiener filter and the cancellation receiver require knowledge of the number and spreading sequences of the interfering users at the receiver, and the Wiener filter also requires a priori knowledge of the signal to noise ratio. If the signal to noise ratio is very high, calculation of the inverse of the autocorrelation matrix for the Wiener filter can be difficult as it becomes close to singular. In a computer network application the calculation of the Wiener filter in advance may be feasible, but in a mobile communications application the signal to noise ratio and the number of users varies rapidly with time. However, a good approximation to the Wiener filter can often be obtained using an adaptive algorithm.

**Derivation A**

To calculate the BER for the Wiener filter we require to find a relationship between the MMSE and the variance at the output of the filter.

$$MMSE = E[(D_0(k) - \hat{x})^2] = E[D_0^2(k)] - (2.0)E[D_0(k)\hat{x}] + E[\hat{x}^2]$$

where $E[]$ denotes the expected value and x denotes the filter output. $D_0(k)$ takes the values $\pm 1$, therefore:-

$$MMSE = 1 - (2.0)\underline{h}^T \underline{\Phi}_{yx} + E[\hat{x}^2] \qquad \text{[A.1]}$$

The variance of the filter output is given by:-

$$var(\hat{x}) = E[(\hat{x} - \bar{\hat{x}})^2] = E[\hat{x}^2] - (2.0)E[\hat{x}\bar{\hat{x}}] + E[\bar{\hat{x}}^2]$$

where $\bar{x}$ denotes E[x].

$$var(\hat{x}) = (\underline{h}^T \underline{\Phi}_{yx})^2 - (2.0)(\underline{h}^T \underline{\Phi}_{yx})^2 + E[\hat{x}^2] \qquad \text{[A.2]}$$

Subtracting [A.1] from [A.2] and rearranging gives:-

$$var(\overset{\wedge}{x}) = - (\underline{h}^T\Phi_{yx})^2 + (2.0)\underline{h}^T\underline{\Phi}_{yx} - 1.0 + MMSE$$

Therefore, assuming the output of the Wiener filter has a Gaussian distribution, the BER is given by:-

$$BER_{Wiener} = \text{erfc}\left(\sqrt{\left(\frac{(\underline{h}^T\Phi_{yx})^2}{var(\hat{x})}\right)}\right) = \text{erfc}\left(\sqrt{\left(\frac{(\underline{h}^T\Phi_{yx})^2}{-(\underline{h}^T\Phi_{yx})^2 + (2.0)\underline{h}^T\Phi_{yx} - 1.0 + MMSE}\right)}\right)$$

## VOLTERRA RECEIVER

The Volterra receiver is made up by a power series expansion of the received signal followed by a linear filter such as MMSE where the Volterra expanded signal *v* is used instead of the original received signal *y*. For a DS-CDMA system with received input signal $y(kN+n)$, the output of the third order Volterra expansion is given by:-

$$\hat{D} = sgn \sum_{a=0}^{N-1} h_1(a)y(kN+n-a) + \sum_{a=0}^{N-1}\sum_{b=0}^{N-1} h_2(a,b)y(kN+n-a)y(kN+n-b)$$

$$+ \sum_{a=0}^{N-1}\sum_{b=0}^{N-1}\sum_{c=0}^{N-1} h_3(a,b,c)y(kN+n-a)y(kN+n-b)y(kN+n-c)$$

where the *h* co-efficients are estimated using a linear technique such as MMSE with the autocorrelation and crosscorrelation matrices replaced with the autocorrelation and crosscorrelation matrices of the power series expanded matrices.

## References

[1] S. Haykin, *Adaptive Filter Theory.* New Jersey: Prentice Hall, 3rd ed., 1996.

[2] B. Widrow and M.E. Hoff, "Adaptive switching circuits," *IRE WESCON Conv. Rec.,* vol. 4, pp. 96-104, 1960.

[3] N. Kalouptsidis and S. Theodoridis, *Adaptive System Identification and Signal Processing Algorithms.* New York: Prentice Hall, 1993.

[4] J.I. Nagumo and A. Noda, "A learning method for system identification," *IEEE Transactions* on *Automated Control,* vol. AC-12, pp. 282-287, 1967.

[5] D.G.M.G. Carayannis and N. Kalouptsidis, "A Fast Sequential Algorithm for Least-Squares Filtering and Prediction," *IEEE Transactions* on *Communications*, vol. ASSP-31, pp. 1394-1402, November 1983.

[6] M.S. Grewal and A.P. Andrews, *Kalman Filtering.* New York: Prentice Hall, 1993.

[7] G.V. Moustakides, "Correcting the instability due to finite precision of the fast Kalman Identification Algorithms," *Signal Processing*, Elsevier Science Publishers, vol. 18, pp. 33-42, 1989.

[8] D.G.M. Cruickshank, "Suppression of Multiple Access Interference in a DS-CDMA System using Wiener Filtering and Parallel Cancellation," *IEE Proceedings (Communications)*, 143, 4, pp. 226-230 (Aug 1996).

[9] T. Kawahara and T. Matsumoto, "Joint Decorrelating Multiuser Detection and Channel Estimation in Asynchronous CDMA Mobile Communications Channels," *IEEE Transactions on Vehicular Technology, 44,* 3, pp. 506-515 (August 1998).

[10] R. Tanner and D.G.M. Cruickshank, "Volterra Based Receivers for DS-CDMA," *8th IEEE International Symposium* on *Personal, Indoor and Mobile Radio Communications PIMRC '97,* 3, pp. 1166-1170, Helsinki (September 1997).

[11] R. Tanner and D.G.M. Cruickshank, "RBF Based Receivers for DS-CDMA with reduced complexity," *IEEE Fifth International Symposium on Spread Spectrum Techniques and Applications, ISSSTA '98*, 2, pp. 647-651, Sun City, South Africa (September 1998).

[12] R.S. Mowbray, R.D. Pringle, and P.M. Grant, "Increased CDMA System Capacity through Adapative Co-channel Interference Regeneration and Cancellation," *IEE Proceedings,* 139, Part I, No. 5, pp. 515-524 (October 1992).

[13] I.W. Band and D.G.M. Cruickshank, "Improving the Capacity of DS-CDMA Systems Using Convolutional Coding and Interference Cancellation," *IEE Proceedings (Communications)*, 145, 3, pp. 186-190 (June 1998).

[14] S. Verdu, "Minimum Probability of Error for Asynchronous Gaussian Multiple-Access Channels," *IEEE Transactions on Information Theory,* 32, pp 85-96 (January 1986).

[15] P.M. Grant, C.F.N Cowan, J.H. Dripps, and B. Mulgrew, *Analogue and digital signal processing & coding,* Chartwell-Bratt, Bromley, Kent (1989). ISBN 0-86238-206-8.

[16] B. D. Van Veen and K. M. Buckley, "Beamforming: A Versatile approach to Spatial Filtering," *IEEE ASSAP Magazine,* pp. 4-24 (April 1988).

[17] R. Monzingo and T. Miller, *Introduction to Adaptive Arrays,* Wiley and Sons, New York (1980).

[18] M. Abdulrahman, A. U. H. Sheikh, and D. D. Falconer, "DFE Convergence for Interference Cancellation in Spread Spectrum Multiple Access Systems," *Vehicular Technology Conference (VTC)*, pp. 807-810 (May 1993).

[19] P. N. Monogioudis, R. Tafazolli, and B. G. Evans, "Performance of adaptive nonlinear NEFAR CDMA receiver architecture," *Electronics Letters,* 30, 3 (February 1994).

[20] A. Klein and P. W. Baier, "Simultaneous Cancellation of Cross Interference and ISI in CDMA Mobile Radio Communications," *3rd IEEE International Symposium on Personal, Indoor and Mobile Radio Communications (PIMRC),* pp. 118-122 (October 1992).

[21] R. Kohno, P. B. Rapajic, and B. S. Vucetic, "An Overview of Adaptive Techniques for Interference Minimisation in CDMA Systems," *Wireless Personal Communications*, 1, 1, pp. 3-21 (1994).

[22] P.M. Grant and B. Mulgrew, "Nonlinear Adaptive Filters: Design and Application, " *Proceedings of the 5th IFAC Symposium on Adaptive Systems in Control and Signal Processing,* pp. 31-42 (June 1995). ISBN 963 311 344 X.

[23] U. Mitra and H. V. Poor, "Neural Network Techniques for Adaptive Multiuser Demodulation," *IEEE Journal on Selected Areas in Communications,* 12, 9, pp. 1460-1470 (December 1994).

[24] D.G.M. Cruickshank, "Optimal and Adaptive FIR Filter Receivers for DS-CDMA," *Personal, Indoor and Mobile Radio Communications PIMRC '94,* pp. 1339-1343 (September 1994).

[25] A. J. Viterbi, "Very Low Rate Convolutional Codes for Maximum Theoretical Performance of Spread Spectrum Multiple-Access Channels," *IEEE Journal on Selected Areas in Communications,* 8, 4, pp. 641-649 (May 1990).

[26] R. Kohno, H. Imai, M. Hatori, and S. Pasupathy, "An Adaptive Canceller of Cochannel Interference for Spread-Spectrum Multiple-Access Communication Networks in a Power Line," *IEEE Journal on Selected Areas in Communications,* 8,4, pp. 69 1-699 (May 1990).

[27] M. Ewerbring, B. Gudmundson, G. Larsson, and P. Teder, "CDMA with Interference Cancellation: A Technique for High Capacity Wireless Systems," *International Conference on Communications (ICC '93)*, 3, pp. 1901-1906 (May 1993).

[28] P. Jung, J. Blanz, M. Nasshan, and P. W. Baier, "Simulation of the Uplink of DS-CDMA Mobile Radio Systems with Coherent Receiver Antenna Diversity," *Wireless Personal Communications,* 1, 1, pp. 61-89 (1994).

**Claims**

1. A direct sequence code division multiple access receiver comprising an adaptive filter (8) controlled by an adaptive algorithm (10) for filtering data which has been multiplied by a spreading code and filtered by a channel filter, the adaptive filter (8) having a length appropriata to model the inverse of the channel filter, and a precalculated multiuser detector (14) operating on the output of the adaptive filter (8).

2. A receiver according to claim 1, wherein the algorithm 10 is trained using the signal of a desired user.

3. A receiver according to claim 1 or 2, wherein the algorithm (10) is trained using a composite signal from more than one user.

4. A receiver according to claim 1, 2 or 3, wherein the multiuser detector (14) is of the minimum mean squared error type.

5. A receiver according to claim 1, 2 or 3, wherein the multiuser detector (14) is of the zero forcing decorrelating type.

6. A receiver according to claim 1, 2 or 3, wherein the multiuser detector (14) is of the Volterra type.

7. A receiver according to claim 1, 2 or 3, wherein the multiuser detector (14) is of the Radial Basis Function type.

8. A receiver according to claim 11 2 or 3, wherein the multiuser detector (14) is of the cancellation type.

9. A receiver according to claim 1, 2 or 3, wherein the multiuser detector (14) is of the near optimum decoding type.

10. A receiver according to any preceding claim, wherein the algorithm (10) comprises the least mean squares algorithm.

11. A receiver according to any one of claims 1 to 9, wherein the algorithm (10) comprises the recursive least squares algorithm.

12. A receiver according to any one of claims 1 to 9, wherein the algorithm (10) comprises the fast a-posteriori error sequential technique algorithm.

13. A receiver according to any one of claims 1 to 9, wherein the algorithm (10) comprises the stabilised fast a-posteriori error sequential technique algorithm.

14. A receiver according to claim 12 or 13, wherein said algorithm (10) is used in combination with the Fast Newton algorithm.

**Patentansprüche**

1. Direktsequenz-CDMA-Empfänger (code division multiple access) mit einem durch einen adaptiven Algorithmus (10) gesteuerten adaptiven Filter (8) zum Filtern von Daten, die mit einem Spreizkode multipliziert und durch ein Kanalfilter gefiltert worden sind, wobei das adaptive Filter (8) eine zum Modellieren des Kehrwerts des Kanalfilters geeignete Länge aufweist, und einem vorausberechneten Mehrsignaldetektor (14), der die Ausgabe des adaptiven Filters (8) auswertet.

2. Empfänger nach Anspruch 1, wobei der Algorithmus (10) unter Verwendung des Signals eines gewünschten Benutzers trainiert wird.

3. Empfänger nach Anspruch 1 oder 2, wobei der Algorithmus (10) unter Verwendung eines zusammengesetzten Signals von mehr als einem Benutzer trainiert wird.

**4.** Empfänger nach Anspruch 1, 2 oder 3, wobei der Mehrsignaldetektor (14) ein Detektor der MMSE-Art (minimum mean squared error) ist.

**5.** Empfänger nach Anspruch 1, 2 oder 3, wobei der Mehrsignaldetektor (14) ein Detektor der Nullerzwingungs-Art (Dekorrelation) ist.

**6.** Empfänger nach Anspruch 1, 2 oder 3, wobei der Mehrsignaldetektor (14) ein Detektor der Volterra-Art ist.

**7.** Empfänger nach Anspruch 1, 2 oder 3, wobei der Mehrsignaldetektor (14) ein Detektor der RBF-Art (Radial Basis Function) ist.

**8.** Empfänger nach Anspruch 1, 2 oder 3, wobei der Mehrsignaldetektor (14) ein Detektor der Unterdrückungs-Art ist.

**9.** Empfänger nach Anspruch 1, 2 oder 3, wobei der Mehrsignaldetektor (14) ein Detektor der optimalwertnahen Deködierungs-Art ist.

**10.** Empfänger nach einem der vorhergehenden Ansprüche, wobei der Algorithmus (10) den LMS-Algorithmus (least mean squares) umfaßt.

**11.** Empfänger nach einem der Ansprüche 1 bis 9, wobei der Algorithmus (10) den RLS-Algorithmus (recursive least squares) umfaßt.

**12.** Empfänger nach einem der Ansprüche 1 bis 9, wobei der Algorithmus (10) den FAEST-Algorithmus (fast a posteriori error sequential technique) umfaßt.

**13.** Empfänger nach einem der Ansprüche 1 bis 9, wobei der Algorithmus (10) den SFAEST-Algorithmus (stabilised fast a posteriori error sequential technique) umfaßt.

**14.** Empfänger nach Anspruch 12 oder 13, wobei der Algorithmus (10) in Verbindung mit dem Fast-Newton-Algorithmus verwendet wird.

**Revendications**

**1.** Récepteur à accès multiple par différence de code à séquence directe comprenant un filtre adaptatif (8) commandé par un algorithme adaptatif (10) pour filtrer des données qui ont été multipliées par un code d'étalement et filtrées par un filtre de canal, le filtre adaptatif (8) ayant une longueur appropriée afin de modéliser l'inverse du filtre de canal, et un détecteur d'utilisateurs multiples précalculés (14) fonctionnant sur la sortie du filtre adaptatif (8).

**2.** Récepteur selon la revendication 1, dans lequel l'algorithme (10) est formé en utilisant le signal d'un utilisateur désiré.

**3.** Récepteur selon la revendication 1 ou 2, dans lequel l'algorithme (10) est formé en utilisant un signal composite provenant de plus d'un utilisateur.

**4.** Récepteur selon la revendication 1, 2 ou 3, dans lequel le détecteur d'utilisateurs multiples (14) est du type à erreur quadratique moyenne minimale.

**5.** Récepteur selon la revendication 1, 2 ou 3, dans lequel le détecteur d'utilisateurs multiples (14) est du type à décorrélation à forçage au zéro.

**6.** Récepteur selon la revendication 1, 2 ou 3, dans lequel le détecteur d'utilisateurs multiples (14) est du type Volterra.

**7.** Récepteur selon la revendication 1, 2 ou 3, dans lequel le détecteur d'utilisateurs multiples (14) est du type à Fonction de Base radiale.

**8.** Récepteur selon la revendication 1, 2 ou 3, dans lequel le détecteur d'utilisateurs multiples (14) est du type à annulation.

9. Récepteur selon la revendication 1, 2 ou 3, dans lequel le détecteur d'utilisateurs multiples (14) est du type à décodage presque optimum.

10. Récepteur selon l'une quelconque des revendications précédentes, dans lequel l'algorithme (10) comprend l'algorithme des moindres carrés moyens.

11. Récepteur selon l'une quelconque des revendications 1 à 9, dans lequel l'algorithme (10) comprend l'algorithme récursif des moindres carrés.

12. Récepteur selon l'une quelconque des revendications 1 à 9, dans lequel l'algorithme (10) comprend l'algorithme de la technique séquentielle d'erreur a posteriori rapide.

13. Récepteur selon l'une quelconque des revendications 1 à 9, dans lequel l'algorithme (10) comprend l'algorithme de la technique séquentielle d'erreur a posteriori rapide stabilisé.

14. Récepteur selon la revendication 12 ou 13, dans lequel ledit algorithme (10) est utilisé en combinaison avec l'algorithme de Newton rapide.

USER ONE
DATA (BIT
RATE)

USER ONE CODE
(CHIP RATE)
N CHIPS / BIT

USER TWO
DATA (BIT
RATE)

USER TWO CODE
(CHIP RATE)
N CHIPS / BIT

USER U
DATA (BIT
RATE)

USER U CODE
(CHIP RATE)
N CHIPS / BIT

$\Sigma$

CHANNEL
FILTER (FIR OF
LENGTH P
CHIPS)

GAUSSIAN
NOISE

$\Sigma$

TRANSMISSION
RECEIVER

ETP

$\Sigma$

USER ONE
DATA
ESTIMATE

DOWN SAMPLE
TO BIT RATE AT
SYNCHRONOUS
POINTS

ADAPTIVE ALGORITHM

ADAPTIVE FIR FILTER OF
LENGTH N+P-1 CHIPS

1

FIG. 1

(PRIOR ART)

30

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 17

FIG. 16

FIG. 18

a) $E_b / N_0 = 7$dB

b) $E_b / N_0 = 9$dB

FIG. 18 CONT'D

c) $E_b / N_0 = 11dB$

d) $E_b / N_0 = 13dB$

EP 1 155 509 B1